# EUROPÄISCHE PATENTSCHRIFT

(11) **EP 3 083 832 B1**
(45) Veröffentlichungstag und Bekanntmachung des Hinweises auf die Patenterteilung: **22.05.2019**
(21) Anmeldenummer: 14823937.9
(22) Anmeldetag: 16.12.2014
(51) Int. Cl.: C08L 77/06, C08K 3/24, C08K 3/32, C08K 7/14, C08L 71/12

(54) **POLYAMIDFORMMASSE UND DEREN VERWENDUNG**
POLYAMIDE MOULDING MATERIAL AND ITS APPLICATION
MASSE MOULÉE EN POLYAMIDE ET SON UTILISATION

(30) Priorität: 20.12.2013 EP 13199136
(43) Veröffentlichungstag der Anmeldung: 26.10.2016
(73) Patentinhaber: EMS-PATENT AG, 7013 Domat / Ems (CH)
(72) Erfinder: AEPLI, Etienne, CH-7013 Domat/Ems (CH)
(74) Vertreter: Bremi, Tobias Hans
(86) Internationale Anmeldenummer: PCT/EP2014/077880
(87) Internationale Veröffentlichungsnummer: WO 2015/091429

(56) Entgegenhaltungen:
- WO-A1-2012/128219
- WO-A2-2009/141800

## Beschreibung

### TECHNISCHES GEBIET

Die vorliegende Erfindung betrifft thermoplastische Polyamidformmassen mit verbesserten mechanischen Eigenschaften und hohem Glanz. Die Formmassen enthalten neben Polyamid, Polyphenylenether und Glasfasern sowie ein LDS-Additiv. Daraus hergestellte Formteile sind Reflow-lötbar und nach partieller Bestrahlung gezielt metallisierbar. Verwendung finden die erfindungsgemässen Formmassen insbesondere für die Herstellung von spritzgegossenen Schaltungsträgern.

### STAND DER TECHNIK

Schaltungsträger aus thermoplastischen Kunststoffen haben gegenüber bisherigen Schaltungsträgern den Vorteil der verbesserten Gestaltungsfreiheit, der guten Umweltverträglichkeit und des Rationalisierungspotentials bezüglich des Herstellverfahrens des Endproduktes. Die Integration von elektrischen und mechanischen Funktionen in einem Spritzgussteil kann zu einer Miniaturisierung der Baugruppe führen. Ausserdem können ganz neue Funktionen realisiert und nahezu beliebige Formen gestaltet werden.

Aus der EP-A-1 274 288 ist die sogenannte additive Laser-Strukturierungstechnik bekannt (Laser Direct Structuring, LDS), bei welcher das im Standard-Spritzgiessverfahren hergestellte Formteil mit besonderen Materialeigenschaften, z.B. auf bekeimbarer PBT-Basis, durch einen Laser strukturiert wird. Hierdurch werden auf der Kunststoffoberfläche partiell diejenigen Bereiche, die später die Leitungsbahnen tragen sollen, mit Metallatomen bekeimt, auf denen nachfolgend in chemisch reduktiven Metallisierungsbädern eine Metallschicht wächst. Die Metallkeime entstehen durch Aufbrechen von feinstverteilt im Trägermaterial enthaltenen Metallverbindungen. Nicht bestrahlte Kunststoffbereiche bleiben im Metallisierungsbad unverändert erhalten.

WO-A-2013/076314 beschreibt mit einem Laser direkt strukturierbare thermoplastische Formmassen, die ein auf Zinn und einem weiteren Metall aus einer bestimmten Gruppe basierendes Metallmischoxid als LDS-Additiv enthalten und zeigt anhand von unverstärkten Formmassen aus Polycarbonat oder Polycarbonat-ABS-Mischungen, dass diese Formmassen einen guten Weissgrad besitzen und dass die Metallisierung mit steigendem Anteil an Anitmonoxid verbessert werden kann.

WO-A-2012/056416 weist bei unverstärkten und nicht flammgeschützten Polycarbonat/ABS-Blends darauf hin, dass der Zusatz von Titandioxid unabhängig vom Typ des verwendeten LDS-Additivs zu Formmassen mit guten Weissgrad führen kann. Aus der WO-A- 2009/141800 sind thermoplastische Formmassen für die LDS-Strukturierung mit einem keramischen Füllstoff bekannt.

WO2012128219 beschreibt ein thermoplastisches Harz-Formteil, welches gute Biegefestigkeit, hohes Biegeelastizitätsmodul und gute Charpy-Schlagzähigkeit aufweist, und auf der Oberfläche dessen eine LDS Metallisierung ausgebildet werden kann.

### DARSTELLUNG DER ERFINDUNG

Ausgehend hiervon war es Aufgabe der vorliegenden Erfindung, für die MID (Molded Interconnect Devices)-Technik geeignete thermoplastische Polyamidformmassen, und insbesondere solche, die neben Glasfasern auch LDS-Additive enthalten, bereitzustellen, mit denen Formkörper mit guten mechanischen Eigenschaften, insbesondere mit hoher Steifigkeit, hoher Reissfestigkeit und guter Schlagzähigkeit sowie hohem Glanz herstellbar sind und sicher blisterfrei lötbar sind. Darüber hinaus sollen die Formkörper nach Laserbestrahlung gut metallisierbar sein und die Leiterbahnen sollen eine gute Haftung am Polymersubstrat aufweisen.

Die thermischen und mechanischen Eigenschaften sowie die damit verbundenen Einsatzgebiete dieser Schaltungsträger werden in erster Linie durch die zugrundeliegende thermoplastische Formmasse bestimmt. Polyamide sind heutzutage weit verbreitet als Strukturelemente für den Innen- und Aussenbereich, was im Wesentlichen auf die hervorragenden (thermo-)mechanischen Eigenschaften, auch unter unterschiedlichen klimatischen Bedingungen, zurückzuführen ist.

Eine Verbesserung der mechanischen Eigenschaften, wie Festigkeit und Steifheit, lässt sich insbesondere durch den Zusatz faserförmiger Verstärkungsstoffe, z.B. Glasfasern oder Carbonfasern, erreichen. In vielen Fällen werden neben den Glasfasern auch noch teilchenförmige Füllstoffe verwendet, sei es, um die Formmassen mittels anorganischer Pigmente einzufärben oder andere spezifische Eigenschaftsmodifizierungen vorzunehmen. Durch den Zusatz von partikulären Füllstoffen, wie z.B. auch den LDS-Additiven zu den glasfaserverstärkten Formmassen werden die mechanischen Eigenschaften aber in der Regel deutlich verschlechtert, insbesondere wird die Reissfestigkeit, die Reissdehnung sowie die Schlagzähigkeit normalerweise erheblich reduziert. Weiterhin wird auch die Oberflächengüte insbesondere der Glanz verschlechtert.

Durch die spezifische Zusammensetzung der erfindungsgemässen Formmassen wird trotz der Kombination von faserförmigen und partikulären Füllstoffen unerwartet erreicht, dass Formteile hergestellt aus diesen Formmassen neben anderen positiven Eigenschaften gute mechanische Eigenschaften und eine hohe Oberflächengüte aufweisen, sicher im Reflow-Lötprozess lötbar sind.

Konkret betrifft die Erfindung eine Polyamidformmasse, insbesondere mit hoher Steifigkeit, Reissfestigkeit, hoher Schlagzähigkeit und hohem Glanz, nach Anspruch 1, insbesondere bestehend aus:
(A) 30 - 84.9 Gew.-% einer thermoplastischen Polymermischung, bestehend aus
   (A1) 50 - 90 Gew.-% oder 55 - 90 Gew.-% eines teilaromatischem, teilkristallinen Polyamids oder einer Mischung solcher Polyamide;
   (A2) 5 - 50 Gew.-% oder 10 - 45 Gew.-% eines Polyphenylenethers oder einer Mischung solcher Polyphenylenether,
   (A3) 0 - 40 Gew.% eines teilkristallinen, aliphatischen Polyamids,
   wobei sich (A1) - (A3) zu 100 Gew.-% Komponente (A) ergänzen;
(B) 15 - 60 Gew.-% Glasfasern;
(C) 0.1 - 10 Gew.-% LDS-Additiv oder einer Mischung von LDS-Additiven, wobei mindestens ein LDS-Additiv ganz oder teilweise aus anorganischen Verbindungen des Kupfers und/oder Zinns aufgebaut ist;
(D) 0 - 40 Gew.-% partikulärer Füllstoff, verschieden von (C)
(E) 0 - 5 Gew.-%, vorzugsweise 0 - 2 Gew.-% weitere andere Additive;
wobei die Summe aus (A) - (E) 100 Gew.-% ausmacht.
Typischerweise macht die Summe von (A2) und (A3) 10 bis 50 Gew.-% der Komponente (A) aus.
Bevorzugtermassen liegt dabei der Anteil an Komponente (A) innerhalb der Summe von (A)-(E) im Bereich von (A) im Bereich von 37-80.5 Gew.-%, vorzugsweise im Bereich von 49-79 Gew.-%.

Der Anteil an Komponente (B) liegt bevorzugtermassen im Bereich von 18-55 Gew.-%, vorzugsweise im Bereich von 20-45 oder 25 - 40 Gew.-%, wiederum jeweils bezogen auf die Summe aus (A) - (E).

Der Anteil an Komponente (C) liegt bevorzugtermassen im Bereich von 0.5-8 Gew.-% liegt, vorzugsweise im Bereich von 1-6 Gew.-%, jeweils bezogen auf die Summe aus (A) - (E).

Bei der **Komponente (A1)** handelt es sich um teilkristalline, teilaromatische Polyamide, welche bevorzugtermassen eine Glasübergangstemperatur im Bereich von 90 bis 150 °C, bevorzugt im Bereich von 110 bis 140 °C und insbesondere im Bereich von 115 bis 135 °C besitzen. Der Schmelzpunkt des Polyamids (A1) liegt im Bereich von 255 bis 330 °C, bevorzugt im Bereich von 270 bis 325 °C und insbesondere im Bereich von 280 bis 320 °C. Bevorzugt verfügen die teilkristallinen, teilaromatischen Polyamide der Komponente (A1) über mittels DSC bestimmte Schmelzenthalpien gemäss ISO 11357 im Bereich von 25 - 80 J/g, vorzugsweise im Bereich von 30 - 70 J/g.

Bevorzugte teilaromatische, teilkristalline Polyamide sind dabei aus
a) 30 bis 100 mol-%, insbesondere 50 bis 100 mol-% Terephthalsäure und/oder Naphthalindicarbonsäure sowie 0 bis 70 mol-%, insbesondere 0 bis 50 mol-% mindestens einer aliphatischen Dicarbonsäure mit 6 bis 12 Kohlenstoffatomen, und/oder 0 bis 70 mol-%, insbesondere 0 bis 50 mol-% mindestens einer cycloaliphatischen Dicarbonsäure mit 8 bis 20 Kohlenstoffatomen, und/oder 0 bis 50 mol-% Isophthalsäure, bezogen auf die Gesamtmenge der Dicarbonsäuren,
b) 80 bis 100 mol-% mindestens eines aliphatischen Diamins mit 4-18 Kohlenstoffatomen, vorzugsweise mit 6 bis 12 Kohlenstoffatomen sowie 0 bis 20 mol-% mindestens eines cycloaliphatischen Diamins, vorzugsweise mit 6 bis 20 Kohlenstoffatomen, wie z.B. PACM, MACM, IPDA und/oder 0 bis 20 mol-% mindestens eines araliphatischen Diamins, wie z.B. MXDA und PXDA, bezogen auf die Gesamtmenge der Diamine, sowie gegebenenfalls
c) Aminocarbonsäuren und/oder Lactamen je mit 6 bis 12 Kohlenstoffatomen,
hergestellt.

Gemäss einer bevorzugten Ausführungsform wird dabei das teilaromatische Polyamid der Komponente (A1) auf Basis von wenigstens 55 Mol-%, insbesondere von wenigstens 65 Mol-% Terephthalsäure und wenigstens 80 Mol-%, bevorzugt wenigstens 90 Mol-%, insbesondere wenigstens 95 Mol-% aliphatischen Diaminen mit 4 bis 18 Kohlenstoffatomen, vorzugsweise mit 6-12 Kohlenstoffatomen, und gegebenenfalls weiteren aliphatischen, cycloaliphatischen und aromatischen Dicarbonsäuren sowie Lactamen und/oder Aminocarbonsäuren, gebildet. Als weitere aromatische Dicarbonsäuren können neben der Terephthalsäure Isophthalsäure und Naphthalindicarbonsäure verwendet werden. Geeignete aliphatische und cycloaliphatische Dicarbonsäuren, die neben Terephthalsäure verwendet werden können, besitzen 6 bis 36 Kohlenstoffatome und werden in einem Anteil von höchstens 70 Mol-%, insbesondere in einem Anteil von höchstens 50 Mol-%, bezogen auf die Gesamtmenge der Dicarbonsäuren, eingesetzt. Zudem ist bevorzugt, dass die genannten aromatischen Dicarbonsäuren des teilaromatischen Polyamids der Komponente (A1) ausgewählt sind aus der Gruppe: Terephthalsäure, Isophthalsäure, sowie Mischungen davon.

Gemäss einer weiteren bevorzugten Ausführungsform sind die genannten z.B. aliphatischen Dicarbonsäuren des teilaromatischen Polyamids der Komponente (A1), die neben Terephthalsäure eingesetzt werden können, ausgewählt aus der Gruppe Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure und Dimerfettsäure (C36). Besonders bevorzugt werden Adipinsäure, Sebazinsäure und Dodecandisäure. Dicarbonsäuren die neben Terephthalsäure bevorzugt eingesetzt werden demnach: Isophthalsäure, Adipinsäure, Sebazinsäure und Dodecandisäure oder eine Mischung derartiger Dicarbonsäuren. Insbesondere werden Polyamide (A1) bevorzugt, die ausschliesslich auf Terephthalsäure als Dicarbonsäure beruhen.

Gemäss einer weiteren bevorzugten Ausführungsform sind die genannten aliphatischen Diamine des teilaromatischen Polyamids der Komponente (A1) ausgewählt aus der Gruppe 1,4-Butandiamin, 1,5-Pentandiamin, 1,6-Hexandiamin, 1,7-Heptandiamin, 1,8-Octandiamin, 1,9-Nonandiamin, Methyl-1,8-Octandiamin, 1,10-Decandiamin, 1,11-Undecandiamin, 1,12-Dodecandiamin, oder einer Mischung derartiger Diamine, wobei 1,6-Hexandiamin, 1,10-Decandiamin, 1,12-Dodecandiamin, oder eine Mischung derartiger Diamine bevorzugt ist, und wobei 1,6-Hexandiamin und 1,10-Decandiamin besonders bevorzugt sind. Neben den aliphatischen Diaminen können in einer Konzentration von 0 bis 20 Mol-%, bezogen auf die Gesamtmenge an Diaminen, cycloaliphatische und/oder araliphatische Diamine ersetzt werden.

Besonders bevorzugt werden die Polyamide (A1) aus folgenden Komponenten gebildet:
(A1_a): Dicarbonsäuren: 50 - 100 Mol-% aromatische Terephthalsäure und/oder Naphthalindicarbonsäure, bezogen auf den Gesamtgehalt an anwesenden Dicarbonsäuren, 0 - 50 Mol-% einer aliphatischen Dicarbonsäure, bevorzugt mit 6 bis 12 Kohlenstoffatomen, und/oder einer cycloaliphatischen Dicarbonsäure mit bevorzugt 8 bis 20 Kohlenstoffatomen, und/oder Isophthalsäure;
(A1_b): Diamine: 80 - 100 Mol-% mindestens eines aliphatischen Diamins mit 4-18 Kohlenstoffatomen, vorzugsweise mit 6 bis 12 Kohlenstoffatomen, bezogen auf den Gesamtgehalt an anwesenden Diaminen, 0 - 20 Mol-% cycloaliphatische Diamine, vorzugsweise mit 6 bis 20 Kohlenstoffatomen, wie z.B. PACM, MACM, IP-DA und/oder araliphatische Diamine, wie z.B. MXDA und PXDA, wobei in den hochschmelzenden Polyamiden der prozentuale Molgehalt an Dicarbonsäuren 100 % und der prozentuale Molgehalt an Diaminen 100 % ausmacht, und gegebenenfalls aus:
(A1_c): Aminocarbonsäuren und/oder Lactamen, enthaltend Lactame mit bevorzugt 6 bis 12 Kohlenstoffatomen, und/oder Aminocarbonsäuren mit bevorzugt 6 bis 12 Kohlenstoffatomen.

Während die Komponenten (A1_a) und (A1_b) bevorzugt weitgehend äquimolar eingesetzt werden, beträgt die Konzentration von (A1_c) vorzugsweise höchstens 30 Gew.-%, bevorzugt höchstens 20 Gew.-%, insbesondere höchstens 15 Gew.-%, jeweils bezogen auf die Summe von (A1_a) bis (A1_c).

Zusätzlich zu den weitgehend äquimolar eingesetzten Komponenten (A1_a) und (A1_b) können Dicarbonsäuren (A1_a) oder Diamine (A1_b) zur Regelung der Molmasse oder zum Ausgleich von Monomerverlusten bei der Polyamidherstellung eingesetzt werden, sodass in ihrer Gesamtheit die Konzentration einer Komponente (A1_a) oder (A1_b) überwiegen kann.

Geeignete cycloaliphatische Dicarbonsäuren sind die cis- und/oder trans-Cyclohexan-1,4-dicarbonsäure und/oder cis- und/oder trans-Cyclohexan-1,3-dicarbonsäure (CHDA). Die oben genannten, in der Regel eingesetzten aliphatischen Diamine können in untergeordneter Menge von nicht mehr als 20 Mol-%, von vorzugsweise nicht mehr als 15 Mol-% und insbesondere nicht mehr als 10 Mol-%, bezogen auf die Gesamtmenge der Diamine, durch andere Diamine ersetzt werden. Als cycloaliphatische Diamine können beispielsweise Cyclohexandiamin, 1,3-Bis-(aminomethyl)-cyclohexan (BAC), Isophorondiamin, Norbornandimethylamin, 4,4'-Diaminodicyclohexylmethan (PACM), 2,2-(4,4'-Diaminodicyclohexyl)propan (PACP) und 3,3'-Dimethyl-4,4'-diaminodicyclohexylmethan (MACM) verwendet werden. Als araliphatische Diamine seien m-Xylylendiamin (MXDA) und p-Xylylendiamin (PXDA) erwähnt.

Zusätzlich zu den beschriebenen Dicarbonsäuren und Diaminen können noch Lactame und/oder Aminocarbonsäuren als polyamidbildende Komponenten (Komponente (A1_c)) eingesetzt werden. Geeignete Verbindungen sind beispielsweise Caprolactam (CL), α,ω-Aminocapronsäure, α,ω-Aminononansäure, α,ω-Aminoundecansäure (AUA), Laurinlactam (LL) und α,ω-Aminododecansäure (ADA). Die Konzentration der zusammen mit den Komponenten (A1_a) und (A1_b) eingesetzten Aminocarbonsäuren und/oder Lactame beträgt höchstens 20 Gew.-%, bevorzugt höchstens 15 Gew.-% und besonders bevorzugt höchstens 12 Gew.-%, bezogen auf die Summe der Komponenten (A1a) bis (A1e). Speziell bevorzugt sind Lactame bzw. α,ω-Aminosäuren mit 4, 6, 7, 8, 11 oder 12 C-Atomen. Dies sind die Lactame Pyrrolidin-2-on (4 C-Atome), ε-Caprolactam (6 C-Atome), Önanthlactam (7 C-Atome), Capryllactam (8 C-Atome), Laurinlactam (12 C-Atome) bzw. die α,ω-Aminosäuren 1,4-Aminobutansäure, 1,6-Aminohexansäure, 1,7-Aminoheptansäure, 1,8-Aminooctansäure, 1,11-Aminoundecansäure und 1,12-Aminododecansäure. In einer besonders bevorzugten Ausführungsform ist Komponente (A1) frei von Caprolactam bzw. Aminocapronsäure oder frei von jeglicher Aminocarbonsäure bzw. jeglichem Lactam.

Zur Regelung der Molmasse, der relativen Viskosität bzw. der Fliessfähigkeit oder des MVR können dem Ansatz und/oder dem Vorkondensat (vor der Nachkondensation) Regler in Form von Monocarbonsäuren oder Monoaminen zugesetzt werden. Als Regler geeignete, aliphatische, cycloaliphatische oder aromatische Monocarbonsäuren oder Monoamine sind Essigsäure, Propionsäure, Buttersäure, Valeriansäure, Capronsäure, Laurinsäure, Stearinsäure, 2-Ethylhexansäure, Cyclohexansäure, Benzoesäure, 3-(3,5-di-tert-butyl-4-hydroxyphenyl)propansäure, 3,5 -di-tert-butyl-4-hydroxybenzoesäure, 3-(3-tert-butyl-4-hydroxy-5-methylphenyl)propansäure, 2-(3,5-di-tert-butyl-4-ydroxybenzylthio)essigsäure, 3,3-bis(3-tert-butyl-4-hydroxyphenyl)butansäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, 2,2,6,6-tetramethylpiperidin-4-amin, 1,2,2,6,6-pentamethylpiperidin-4-amin, 4-amino-2,6-di-tert-butylphenol u.a. Die Regler können einzeln oder in Kombination benutzt werden. Es können auch andere monofunktionelle Verbindungen als Regler eingesetzt werden, die mit einer Amino- oder Säuregruppe reagieren können, wie Anhydride, Isocyanate, Säurehalogenide oder Ester. Die übliche Einsatzmenge der Regler liegt zwischen 10 und 200 mmol pro kg Polymer.

Die teilaromatischen Copolyamide (A1) können mit an sich bekannten Verfahren hergestellt werden. Geeignete Verfahren sind an verschiedener Stelle beschrieben worden, und in der Folge sollen einige der möglichen in der Patentliteratur diskutierten Verfahren angegeben werden, der Offenbarungsgehalt der nachfolgend genannten Dokumente wird hinsichtlich des Verfahrens zur Herstellung des Polyamids der Komponente (A1) der vorliegenden Erfindung ausdrücklich in den Offenbarungsgehalt der vorliegenden Anmeldung eingeschlossen: DE-A-195 13 940, EP-A-0 976 774, EP-A-0 129 195, EP-A-0 129 196, EP-A-0 299 444, US 4,831,106, US 4,607,073, DE-A-14 95 393 und US 3,454,536.

Konkrete Vertreter für die erfindungsgemässen Polyamide (A1) sind: PA 4T/4I, PA 4T/6I, PA 5T/5I, PA 6T/6, PA 6T/6I, PA 6T/6I/6, PA 6T/66, 6T/610, 6T/612, PA 6T/10T, PA 6T/10I, PA 9T, PA 10T, PA 12T, PA 10T/10I, PA10T/106, PA10T/610, PA10T/612, PA10T/66, PA10T/6, PA10T/1010, PA10T/1012, PA10T/12, PA10T/11, PA 6T/9T, PA 6T/12T, PA 6T/10T/6I, PA 6T/6I/6, PA 6T/6I/12 sowie Mischungen davon, insbesondere vorzugsweise ist das teilaromatische Polyamid der Komponente (A1) ausgewählt aus der Gruppe: PA 6T/6I, PA 6T/10T, PA 6T/10T/6I, sowie Mischungen davon. Bevorzugt werden Polyamide (A1), welche 6T-Einheiten, insbesondere wenigstens 10 Gew.-% an 6T-Einheiten enthalten.

Erfindungsgemäss sind daher als Polyamide (A1) insbesondere folgende teilaromatische Copolyamide bevorzugt:
- teilkristallines Polyamid 6T/6I mit 55 bis 75 Mol-% Hexamethylenterephthalamid-Einheiten und 25 bis 45 Mol-% Hexamethylenisophthalamid-Einheiten;
- teilkristallines Polyamid 6T/6I mit 62 bis 73 Mol-% Hexamethylenterephthalamid-Einheiten und 25 bis 38 Mol-% Hexamethylenisophthalamid-Einheiten;
- teilkristallines Polyamid 6T/6I mit 70 Mol-% Hexamethylenterephthalamid-Einheiten und 30 Mol-% Hexamethylenisophthalamid-Einheiten;
- teilkristallines Polyamid, hergestellt aus mindestens 50 Mol-% Terephthalsäure und höchstens 50 Mol-% Isophthalsäure, insbesondere aus 100 Mol-% Terephalsäure, sowie einer Mischung aus mindestens zwei Diaminen, ausgewählt aus der Gruppe Hexamethylendiamin, Nonandiamin, Methyloctandiamin und Decandiamin;
- teilkristallines Polyamid, hergestellt aus 70-100 Mol-% Terephthalsäure und 0-30 Mol-% Isophthalsäure sowie einer Mischung aus Hexamethylendiamin und Dodecandiamin;
- teilkristallines Polyamid, hergestellt aus mindestens 50 Mol-% Terephthalsäure und höchstens 50 Mol-% Dodekandisäure sowie einer Mischung aus mindestens zwei Diaminen, ausgewählt aus der Gruppe Hexamethylendiamin, Nonandiamin, Methyloctandiamin und Decandiamin;
- teilkristallines Polyamid 6T/10T mit 10 bis 60 Mol-%, bevorzugt 10 bis 40 Mol-% Hexamethylenterephthalamid-(6T)-und 40 bis 90 Mol-%, bevorzugt 60 bis 90 Mol-% Decamethylenterephthalamid-(10T)-Einheiten;
- teilkristallines Polyamid 6T/10T/6I mit 50 bis 90 Mol-%, vorzugsweise 50-70 Mol-% Hexamethylenterephthalamid-(6T)-, und 5 bis 45 Mol-%, vorzugsweise 10-30 Mol-% Hexamethylenisophthalamid-(6I)-Einheiten und 5 bis 45 Mol-%, vorzugsweise 20-40 Mol-% Decamethylenterephthalamid-(10T)-Einheiten;
- teilkristallines Polyamid 6T/6I/6 mit 60 bis 85 Mol-% Hexamethylenterephthalamid-(6T)- und 15 bis 40 Mol-% Hexamethylenisophthalamid-(6I)-Einheiten, das zusätzlich 5 - 15 Gew.-% Caprolactam enthält.

Das teilaromatische, teilkristalline Polyamid (A1) hat eine Lösungsviskosität ηᵣₑₗ, gemessen nach DIN EN ISO 307 an Lösungen von 0,5 g Polymer in 100 ml m-Kresol bei einer Temperatur von 20 °C, von höchstens 2,6, bevorzugt von höchstens 2,3, insbesondere von höchstens 2,0. Bevorzugt werden Polyamide (A1) mit einer Lösungsviskosität ηᵣₑₗ im Bereich von 1,45 bis 2,3, insbesondere im Bereich von 1,5 bis 2,0 oder 1,5 bis 1,8. Die erfindungsgemässen Polyamide (A1) können auf üblichen Polykondensationsanlagen über die Prozessfolge Vorkondensat und Nachkondensation hergestellt werden. Für die Polykondensation werden zur Regelung der Viskosität bevorzugt die beschriebenen Kettenregler eingesetzt. Zusätzlich kann die Viskosität durch den Einsatz eines Diamin- oder Disäureüberschusses eingestellt werden.

Die erfindungsgemäss als Komponente (A2) eingesetzten Polyphenylenether sind an sich und für sich allein betrachtet bekannt und können z.B. nach üblichen Verfahren aus in ortho-Position durch Alkylgruppen disubstituierten Phenolen durch oxidative Kupplung hergestellt (vgl. US-Patente US3,661,848, US3,378,505, US3,306,874, US3,306,875 und US3,639,656) werden. Für die Herstellung werden üblicherweise Katalysatoren auf Basis von Schwermetallen wie Kupfer, Mangan oder Kobalt in Kombination mit anderen Substanzen wie sekundären Aminen, tertiären Aminen, Halogenen oder Kombinationen davon benutzt. Geeignete Polyphenylenether sind beispielsweise Poly(2,6-diethyl-1,4-phenylen)ether, Poly(2-methyl-6-ethyl-1,4-phenylen)ether, Poly(2-methyl-6-propyl-1,4-phenylen)ether, Poly(2,6-dipropyl-1,4-phenylen)ether, Poly(2-ethyl-6-propyl-1,4-phenylen)ether oder Copolymere, wie solche, die 2,3,6-Trimethylphenol enthalten, ausserdem Mischungen der genannten Polyphenylenether.

Bevorzugt ist Poly(2,6-dimethyl-1,4-phenylen)ether optional in Kombination mit 2,3,6-Trimethylphenoleinheiten. Die Polyphenylenether können in Form von Homopolymeren, Copolymer, Pfropfcopolymeren, Blockcopolymer oder Ionomeren eingesetzt werden. Geeignete Polyphenylenether weisen im allgemeinen eine Grenzviskosität im Bereich von 0,1 bis 0,6 dl/g, gemessen in Chloroform bei 25°C, auf. Dies entspricht einem Molekulargewicht Mₙ (Zahlenmittelwert) von 3'000 bis 40'000 und einem Gewichtsmittelwert des Molekulargewicht M_{w} von 5'000 bis 80'000. Es ist möglich, eine Kombination eines hochviskosen und eines tiefviskosen Polyphenylenethers einzusetzen. Das Verhältnis der beiden unterschiedlich viskosen Polyphenylenethern hängt von den Viskositäten und den angestrebten physikalischen Eigenschaften ab. Die erfindungsgemässen Mischungen der PPE-Komponenten (A2) mit dem Polyamid (A1) und gegebenenfalls dem Polyamid (A3) umfassen bevorzugt 10 - 46 Gew.-%, vorzugsweise 15 bis 45 oder 15 bis 40 Gew.-% Polyphenylenether. jeweils bezogen auf die Gesamtheit der Komponente A. Für eine bessere Verträglichkeit können im Rahmen von Komponente (A2) Verträglichkeitsvermittler in Form von polyfunktionellen Verbindungen eingesetzt werden, die mit dem Polyphenylenether, dem Polyamid oder mit beiden wechselwirken. Als solche Verträglichkeitsvermittler kann z.B. ein durch Maleinsäureanhydrid-gepfropfter Polyphenylenether wirken. Die Wechselwirkung kann chemisch (z.B. durch Pfropfung) und/oder physikalisch (z.B. durch Beeinflussung der Oberflächeneigenschaften der dispersen Phase) sein. Komponente (A2) umfasst demnach Polyphenylenether allein, hinsichtlich Verträglichkeit mit Komponente (A1) modifizierte, gepfropfte oder mit reaktiven Gruppen versehene Polyphenylenether allein, insbesondere mit Maleinsäureanhydrid gepfropfte Polyphenylenether allein, oder eine Mischung aus Polyphenylenether und Polyphenylenether-g-Maleinsäureanhydrid.

Die hinsichtlich der Verträglichkeit mit Komponente (A1) modifizierten Polyphenylenether der Komponente (A2) enthalten Carbonyl-, Carboxyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppen. Bevorzugt wird das als Komponente (A2) eingesetzte modifizierte PPE hergestellt, indem unmodifiziertes PPE mit α,β-ungesättigten Dicarbonylverbindungen, Amidgruppen oder Lactamgruppen enthaltenden Monomere mit einer polymeriserbaren Doppelbindung in Verbindung mit Radikalstartern modifiziert, wie dies beispielsweise in EP0654505A1 beschrieben ist.

Bevorzugtermassen verfügt die Komponente (A2) über Bestandteile mit Säureanhydridgruppen, die durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht, wobei dafür Reagenzien ausgewählt aus der folgenden Gruppe bevorzugtermassen eingesetzt werden: Maleinsäure, Maleinsäureanhydrid, Maleinsäuremonobutylester, Fumarsäure, Aconitsäure und/oder Itaconsäureanhydrid.

Vorzugsweise werden 0.05 bis 5.0 Gew.-% eines ungesättigten Anhydrids an die Schlagzähkomponente als Bestandteil von (A2) und/oder (A3) aufgepfropft oder das ungesättigte Dicarbonsäureanhydrid oder dessen Vorstufe wird zusammen mit einem weiteren ungesättigten Monomeren aufgepfropft. Generell ist der Pfropfgrad bevorzugtermassen in einem Bereich von 0.1-3.0%, insbesondere bevorzugt in einem Bereich von 0.1-1.5 oder 0.2-0.8%. Besonders bevorzugt werden Maleinsäureanhydrid gepfropfte Polyphenylenether eingesetzt.

Die erfindungsgemäss als **Komponente (A3)** eingesetzten von (A1) und (A2) verschiedenen Polymere sind teilkristalline, aliphatische Polyamide. Bevorzugt beruhen die Polyamide (A3) nicht auf cycloaliphatischen Diaminen und/oder cycloaliphatischen Dicarbonsäuren. Der Gehalt der Komponente (A3) liegt in Bezug auf Gesamtheit der Komponente (A) in einem Bereich von 0 bis 40 Gew.-%, bevorzugt von 5 bis 35 Gew.-% und besonders bevorzugt im Bereich von 5 bis 30 Gew.-%. Innerhalb von Komponente (A) liegt das Verhältnis von (A2) zu (A3) vorzugsweise im Bereich von 4:1 bis 1:4 und bevorzugt im Bereich von 4:1 bis 1:2. Insbesondere ist bevorzugt, wenn der Gehalt von (A3) innerhalb der Komponente von (A) kleiner oder gleich dem Gehalt von Komponente (A2) ist.

Die Komponente (A3) ist bevorzugter Massen ausgewählt aus der folgenden Gruppe: Polyamid 6, Polyamid 10, Polyamid 11, Polyamid 12, Polyamid 1212, Polyamid 1012, Polyamid 1210, Polyamid 46, Polyamid 66, Polyamid 612, Polyamid 126, Polyamid 106, Polyamid 610, Polyamid 1010, Polyamid 614, Polyamid 618, Polyamid 1014, Polyamid 1018, Polyamid 1214, Polyamid 1218 sowie Copolyamide oder Mischungen hiervon. Insbesondere bevorzugt werden Polyamid 6, Polyamid 66, Polyamid 612, Polyamid 106 und Polyamid 610.

In einer weiteren Ausführungsform werden vorzugsweise 0.05 bis 5.0 Gew.-% Acrylsäure, Methacrylsäure, Maleinsäure, Maleinsäureanhydrid, Maleinsäuremonobutylester, Fumarsäure, Aconitsäure und/oder Itaconsäureanhydrid, oder generell eines ungesättigten Anhydrids, an die Komponente (A2), die Komponente (A3), oder an eine Mischung aus den Komponenten (A2) und (A3) aufgepfropft oder das ungesättigte Dicarbonsäureanhydrid oder dessen Vorstufe wird zusammen mit einem weiteren ungesättigten Monomeren aufgepfropft. Generell ist der Pfropfgrad bevorzugtermassen in einem Bereich von 0.1-3 Gew.-%, insbesondere bevorzugt in einem Bereich von 0.2-2.5 oder 0.5-2 Gew.-%. Besonders bevorzugt werden Maleinsäureanhydrid gepfropfte Komponenten (A2) oder Maleinsäureanhydrid gepfropfte Mischungen aus (A2) und (A3) eingesetzt. Es wird demnach bevorzugt, dass die Komponenten (A2) und (A3) gemeinsam gepfropft sind, vor der Zusammenführung mit den restlichen Komponenten (A1) und (B) und (C) sowie ggf. (D) und/oder (E).

Des Weiteren enthalten die Formmassen 15 bis 60 Gew.-% Glasfasern **(Komponente B)**, die z.B. in Form von sogenannten Kurzfasern (z.B. Schnittglas mit einer Länge von 0.2-20 mm) oder Endlosfasern (Rovings) verwendet werden. Die Glasfasern (B) können unterschiedliche Querschnittsflächen aufweisen, wobei Glasfasern mit kreisförmigem Querschnitt (runde Fasern) und mit nicht-kreisförmigem Querschnitt (flache Fasern) bevorzugt sind, auch Mischungen dieser Typen können eingesetzt werden.

Glasfasern mit kreisförmigem Querschnitt, also runde Glasfasern, haben bevorzugt einen Durchmesser im Bereich von 5-20 µm, bevorzugt im Bereich von 6-13 µm und besonders bevorzugt im Bereich von 6-10 µm. Sie werden bevorzugt als Kurzglasfaser (Schnittglas mit einer Länge von 0.2 bis 20 mm, bevorzugt 2-12 mm) eingesetzt.

Bei den flachen Glasfasern, also Glasfasern mit nicht-kreisförmiger Querschnittsfläche, werden vorzugsweise solche mit einem Abmessungsverhältnis von der Hauptquerschnittsachse zur senkrecht darauf stehenden Nebenquerschnittsachse von mehr als 2.5, bevorzugt im Bereich von 2.5 bis 6, insbesondere im Bereich von 3 bis 5 eingesetzt. Diese sogenannten flachen Glasfasern weisen vorzugsweise eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres kennzeichnendes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm und die Länge der Nebenquerschnittsachse im Bereich von 3 bis 20 µm, insbesondere im Bereich von 4 bis 10 µm liegt. Dabei weisen bevorzugt die flachen Glasfasern eine möglichst hohe Packungsdichte auf, d.h. die Glasquerschnittsfläche füllt ein gedachtes, den Glasfaserquerschnitt möglichst exakt umgebendes Rechteck zu mindestens 70%, bevorzugt mindestens 80% und insbesondere bevorzugt zu mindestens 85% aus.

Zur Verstärkung der erfindungsgemässen Formmassen können auch Mischungen von Glasfasern mit kreisförmigem und nicht-kreisförmigem Querschnitt verwendet werden, wobei der Anteil an flachen Glasfasern bevorzugtermassen überwiegt, d.h. mehr als 50 Gew.-% der Gesamtmasse der Fasern ausmacht.

Vorzugsweise ist die Komponente (B) ausgewählt aus der Gruppe bestehend aus: E-Glasfasern (diese bestehen gemäss ASTM D578-00 aus 52-62% Siliciumdioxid, 12-16% Aluminiumoxid, 16-25% Calciumoxid, 0-10% Borax, 0-5% Magnesiumoxid, 0-2% Alkalioxide, 0-1.5% Titandioxid und 0-0.3% Eisenoxid; bevorzugt haben sie eine Dichte von 2.58±0.04 g/cm³, einen Zug-E-Modul von 70-75 GPa, eine Zugfestigkeit von 3000-3500 MPa und eine Reissdehnung von 4.5-4.8%), A-Glasfasern (63-72% Siliciumdioxid, 6-10% Calciumoxid, 14-16% Natrium- und Kaliumoxid, 0-6% Aluminiumoxid, 0-6% Boroxid, 0-4% Magnesiumoxid), C-Glasfasern (64-68% Siliciumdioxid, 11-15% Calciumoxid, 7-10% Natrium- und Kaliumoxid, 3-5% Aluminiumoxid, 4-6% Boroxid, 2-4% Magnesiumoxid), D-Glasfasern (72-75% Siliciumdioxid, 0-1% Calciumoxid, 0-4% Natrium- und Kaliumoxid, 0-1% Aluminiumoxid, 21-24% Boroxid), Basaltfasern (Mineralfaser mit der ungefähren Zusammensetzung: 52% SiO₂, 17% Al₂O₃, 9% CaO, 5% MgO, 5% Na₂O, 5% Eisenoxid sowie weiteren Metalloxiden), AR-Glasfasern (55-75% Siliciumdioxid, 1-10% Calciumoxid, 11-21% Natrium- und Kaliumoxid, 0-5% Aluminiumoxid, 0-8% Boroxid, 0-12%Titandioxid, 1-18% Zirkonoxid, 0-5% Eisenoxid) sowie Mischungen davon.

Eine bevorzugte Ausführungsform der Komponente (B) sind hochfeste Glasfasern beruhend auf dem ternären System Siliciumdioxid-Aluminiumoxid-Magnesiumoxid oder auf dem quaternären System Siliciumdioxid-Aluminiumoxid-Magnesiumoxid-Calciumoxid, wobei die Summe der Gehalte von Siliciumdioxid, Aluminiumoxid und Magnesiumoxid wenigstens 78 Gew.-%, bevorzugt wenigstens 87% und besonders bevorzugt wenigstens 92% bezogen auf die gesamte Glaszusammensetzung beträgt. Konkret wird bevorzugt eine Zusammensetzung von 58-70 Gew.-% Siliciumdioxid (SiO₂), 15-30 Gew.-% Aluminiumoxid (Al₂O₃), 5-15 Gew.-% Magnesiumoxid (MgO), 0-10 Gew.-% Calciumoxid (CaO) und 0-2 Gew.-% weitere Oxide, wie z.B. Zirkoniumdioxid (ZrO2), Boroxid (B₂O₃), Titandioxid (TiO₂) oder Lithiumoxid (Li₂O) eingesetzt. In einer weiteren Ausführungsform besitzt die hochfeste Glasfaser eine Zusammensetzung von 60-67 Gew.-% Siliciumdioxid (SiO₂), 20-28 Gew.-% Aluminiumoxid (Al₂O₃), 7-12 Gew.-% Magnesiumoxid (MgO), 0-9 Gew.-% Calciumoxid (CaO) sowie 0-1.5 Gew.-% weitere Oxide, wie z.B. Zirkoniumdioxid (ZrO2), Boroxid (B₂O₃), Titandioxid (TiO₂), Lithiumoxid (Li₂O).

Insbesondere ist bevorzugt, wenn die hochfeste Glasfaser die nachfolgende Zusammensetzung aufweist: 62-66 Gew.-% Siliciumdioxid (SiO₂), 22-27 Gew.-% Aluminiumoxid (Al₂O₃), 8-12 Gew.-% Magnesiumoxid (MgO), 0- 5Gew.-% Calciumoxid (CaO), 0-1 Gew.-% weitere Oxide, wie z.B. Zirkoniumdioxid (ZrO2), Boroxid (B₂O₃), Titandioxid (TiO₂), Lithiumoxid (Li₂O).

Die hochfeste Glasfaser besitzt eine Zugfestigkeit von grösser oder gleich 3700 MPa, vorzugsweise von wenigstens 3800 oder 4000 MPa, eine Reissdehnung von mindestens 4.8%, vorzugsweise von wenigstens 4.9 oder 5.0 %, und einen Zug-E-Modul von grösser 75 GPa, vorzugsweise von mehr als 78 oder 80 GPa, wobei diese Glaseigenschaften an Einzelfasern (pristine single filament) mit einem Durchmesser von 10 µm und eine Länge von 12.7 mm bei einer Temperatur von 23°C und einer relativen Luftfeuchte von 50% zu bestimmen sind. Konkrete Beispiele für diese hochfesten Glasfasern der Komponente (B1) sind S-Glasfasern von Owens Corning mit 995-Schlichte, T-Glasfasern von Nittobo, HiPertex von 3B, HS4-Glasfasern von Sinoma Jinjing Fiberglass, R-Glasfaern von Vetrotex sowie S-1- und S-2-Glasfasern von AGY.

Die erfindungsgemäss z.B. als Roving eingesetzten Glasfasern (Endlosfasern) weisen einen Durchmesser (bei runden Glasfasern) bzw. eine Nebenquerschnittsachse (bei flachen Glasfasern) von 8 bis 20 µm, bevorzugt von 12 bis 18 µm auf, wobei der Querschnitt der Glasfasern rund, oval, elliptisch, elliptisch mit Einschnürung(en) versehen, polygonal, rechteckig oder nahezu rechteckig sein kann. Besonders bevorzugt werden sogenannte flache Glasfasern mit einem Verhältnis der Querschnittsachsen, d.h. ein Verhältnis von Haupt- zur Nebenquerschnittsachse von 2.5 bis 5. Die Endlosfasern können aus den oben beschriebenen Glassorten hergestellt sein, wobei Endlosfasern auf Basis von E-Glas und den hochfesten Glassorten bevorzugt sind. Diese Endlosfasern werden in die erfindungsgemässen Polyamidformmassen durch bekannte Verfahren zur Herstellung von langfaserverstärktem Stäbchengranulat eingearbeitet, insbesondere durch Pultrusionsverfahren, bei denen der endlose Faserstrang (Roving) mit der Polymerschmelze vollständig durchtränkt und anschliessend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden.

Bevorzugt werden als Komponente (B) Glasfasern aus E-Glas, mit nicht-kreisförmigem Querschnitt (flache Fasern) und mit einem Achsenverhältnis der Hauptquerschnittsachse zur Nebenquerschnittsachse von wenigstens 2.5, und/oder hochfeste Glasfasern mit kreisförmigem oder nicht-kreisförmigem Querschnitt und einer Glaszusammensetzung, beruhend im Wesentlichen auf den Komponenten Siliciumdioxid, Aluminiumoxid und Magnesiumoxid, wobei der Anteil an Magnesiumoxid (MgO) 5-15 Gew.-% und der Anteil an Calciumoxid 0 - 10 Gew.-% beträgt.

Die Glasfasern der Komponente (B) weisen bevorzugt als flache E-Glasfasern eine Dichte von 2.54 - 2.62 g/cm³, einen Zug-E-Modul von 70 - 75 GPa, eine Zugfestigkeit von 3000 - 3500 MPa und eine Reissdehnung von 4.5 - 4.8% auf, wobei die mechanischen Eigenschaften an Einzelfasern mit einem Durchmesser von 10 µm und eine Länge von 12.7 mm bei 23°C und einer relativen Luftfeuchte von 50% bestimmt wurden.

Die erfindungsgemässen Glasfasern können mit einer für Thermoplaste, insbesondere für Polyamid geeigneten Schlichte, enthaltend einen Haftvermittler auf Basis einer Amino- oder Epoxysilanverbindung, versehen sein.

Bevorzugt liegt wie erwähnt der Anteil an **Komponente (C)** im Bereich von 0.5-8 Gew.-%, vorzugsweise im Bereich von 1-6 Gew.-%.

Die Komponente (C) ist bevorzugt ein LDS-Additiv mit einem von Null verschiedenen Absorptionskoeffizienten für UV-, VIS- oder IR-Strahlung, welches unter Einwirkung von elektromagnetischer Strahlung, bevorzugt als Laserstrahlung, Metallkeime bildet, die in einem chemischen Metallisierverfahren die Abscheidung von Metallschichten zur Erzeugung von Leiterbahnen an den bestrahlten Stellen auf der Formteiloberfläche erleichtern und/oder ermöglichen und/oder verbessern, wobei das LDS-Additiv vorzugsweise eine Absorptionsfähigkeit im sichtbaren und infraroten Strahlungsbereich aufweist mit einem Absorptionskoeffizient von wenigstens 0.05, bevorzugt wenigstens 0.1 und insbesondere wenigstens 0.2, und/oder dass ein Absorber vorgesehen ist, der die Strahlungsenergie auf das LDS-Additiv überträgt.

Die Komponente (C) ist bevorzugt ein LDS-Additiv mit einer mittleren Partikelgrösse (D50) im Bereich von 50 - 20000 Nanometer, bevorzugt 200 bis 15000 Nanometer und besonders bevorzugt 300 bis 5000 Nanometer, und/oder einem Aspektverhältnis (Verhältnis Länge zu Durchmesser) von höchstens 10, insbesondere von höchstens 5. Der als Mass für die Partikelgrösse angegebene D50-Wert ist ein Mass für die mittlere Teilchengrösse, wobei 50 Volumen-Prozent der Probe feiner und die anderen 50% der Probe grober sind als der D50-Wert (Median).

In einer bevorzugten Ausführungsform enthält Komponente (C) (oder besteht Komponente (C) aus) ein LDS (Laser Direct Structuring)-Additiv ausgewählt aus der Gruppe der Metalloxide, insbesondere sogenannte Spinelle mit der allgemeinen chemischen Formel

AB₂O₄

wobei steht
A für ein Metallkation mit der Wertigkeit 2, wobei bevorzugt A ausgewählt ist aus der Gruppe bestehend aus: Magnesium, Kupfer, Kobalt, Zink, Zinn, Eisen, Mangan und Nickel sowie Kombinationen davon;
B für ein Metallkation der Wertigkeit 3, wobei bevorzugt B ausgewählt ist aus der Gruppe bestehend aus: Mangan, Nickel, Kupfer, Kobalt, Zinn, Titan, Eisen, Aluminium und Chrom sowie Kombinationen davon,
und wobei mindestens ein LDS-Additiv ganz oder teilweise aus anorganischen Verbindungen des Kupfers und/oder Zinns aufgebaut ist. Dabei ist insbesondere bevorzugt das LDS-Additiv ein Kupfereisenspinell, ein kupferhaltiges Magnesiumaluminiumoxid, ein Kupfer-Chrom-Mangan-Mischoxid, ein Kupfer-Mangan-Eisen-Mischoxid, gegebenenfalls jeweils mit Sauerstofffehlstellen, oder Salze und Oxide des Kupfers, wie insbesondere Kupfer(I)oxid, Kupfer(II)oxid, basische Kupferphosphate, Kupferhydroxidphosphat, Kupfersulfat, sowie Metallkomplexverbindungen, insbesondere Chelatkomplexe von Kupfer, Zinn, Nickel, Cobalt, Silber und Palladium oder Mischungen solcher Systeme, und/oder insbesondere ausgewählt aus der folgenden Gruppe: Kupfer-Chrom-Mangan-Mischoxide, Kupfer-Mangan-Eisen-Mischoxide, Kupferchromoxid, Zink-Eisenoxid, Kobalt-Chromoxid, Kobalt-Aluminiumoxid, Magnesiumaluminiumoxid, sowie Mischungen und/oder oberflächenbehandelte und/oder Sauerstofffehlstellen aufweisende Formen hiervon. Möglich sind z.B. Systeme, wie sie beispielsweise in WO-A-2000/35259 oder in Kunststoffe 92 (2002) 11, 2-7 beschrieben werden.

Ebenfalls bevorzugt wird als Komponente (C) ein LDS (Laser Direct Structuring)-Additiv ausgewählt aus der Gruppe der Metalloxide, Metallmischoxide, Metallhydroxidoxide, Metallsulfidoxide auf Basis von Zinn. Besonders bevorzugt ist Zinnoxid und dotiertes Zinnoxid, wobei die Dotierung mit Antimon, Wismut, Molybdän, Aluminium, Titan, Silicium, Eisen, Kupfer, Silber, Palladium und Kobalt erfolgen kann. Insbesondere wird Zinnoxid, das mit Antimon, Titan oder Kupfer dotiert ist, bevorzugt. Weiterhin werden Mischungen aus Zinnoxid und mindestens einem weiteren Metalloxid, insbesondere Antimonoxid als LDS-Additive bevorzugt. Als weiteres Metalloxide werden dabei sowohl farblose hochbrechende Metalloxide, wie insbesondere Titandioxid, Antimon(III)oxid, Zinkoxid, Zinnoxid und/oder Zirkoniumdioxid verwendet als auch farbige Metalloxide wie z.B. Chromoxid, Nickeloxid, Kupferoxid, Kobaltoxid und insbesondere Eisenoxid (Fe₂O₃, Fe₃O₄). Insbesondere bevorzugt wird die Mischung aus Zinnoxid und Antimon(III)oxid verwendet.

Vorzugsweise sind die dotierten Zinnoxide bzw. Metalloxid-Mischungen bzw. Zinnoxid als Schichten auf plättchenförmigen Substraten, insbesondere Schichtsilikaten, wie z.B. synthetischer oder natürlicher Glimmer, Talkum, Kaolin, Glasplättchen oder Siliciumdioxid-Plättchen, ausgebildet. Als Substrat für die Metalloxide werden insbesondere Glimmer bzw. Glimmerschuppen bevorzugt. Weiterhin kommen als Substrate auch plättchenförmige Metalloxide wie z. B. plättchenförmiges Eisenoxid, Aluminiumoxid, Titandioxid, Siliziumdioxid, LCP's (Liquid Crystal Polymers), holographische Pigmente oder beschichtete Graphitplättchen in Betracht.

Besonders bevorzugt werden LDS-Additive auf Basis von Glimmer, wobei die Glimmeroberfläche mit metalldotierten Zinnoxiden beschichtet ist. Insbesondere bevorzugt wird antimondotiertes Zinnoxid. Beispiele für kommerziell erhältliche LDS-Additive gemäss der vorliegenden Erfindung sind: Lazerflair LS820, LS825, LS830 und Minatec 230 A-IR der Firma Merck, Stanostat CP40W, Stanostat CP15G oder Stanostat CP5C der Firma Keeling&Walker, Fabulase 322S, 330, 350 und 352 von Budenheim.

Die besonders bevorzugten LDS-Additive sind: Kupferchromit, Kupferhydroxidphosphat und antimondotiertes Zinnoxid, wobei Letzteres bevorzugt in Kombination mit Glimmer Verwendung findet.

Bevorzugt liegt der Anteil an **Komponente (D)** im Bereich von 0-25 Gew.-%, vorzugsweise im Bereich von 0-15 Gew.-% und besonders bevorzugt im Bereich von 2 - 15 Gew.-%. Talk, Kreide oder Calciumcarbonat beispielsweise können die Erzeugung von Metallkeimen erleichtern oder die Haftung der Leiterbahnen am Substrat erhöhen.

Als partikuläre Füllstoffe der Komponente (D) kommen alle dem Fachmann bekannten Füllstoffe in Frage. Hierzu zählen insbesondere partikuläre Füllstoffe ausgewählt aus der Gruppe bestehend aus Talk (Magnesiumsilikat), Glimmer, Silikaten, Quarz, Wollastonit, Kaolin, Kieselsäuren, Magnesiumcarbonat, Magnesiumhydroxid, Kreide, gemahlenem oder gefälltem Calciumcarbonat, Kalk, Feldspat, anorganische Pigmente, wie z.B., Eisenoxid oder Eisenmanganoxid oder insbesondere Weisspigmente, wie Bariumsulfat, Zinkoxid, Zinksulfid, Lithopone und Titandioxid (Rutil, Anatas), permanentmagnetischen oder magnetisierbaren Metallen oder Legierungen, hohlkugeligen Silikatfüllstoffen, Aluminiumoxid, Bornitrid, Borcarbid, Aluminiumnitrid, Calciumfluorid und Mischungen hiervon. Die Füllstoffe können auch oberflächenbehandelt sein.

Komponente (D) ist oder besteht bevorzugtermassen ausschliesslich aus den anorganischen Weisspigmenten, ausgewählt aus der Gruppe Bariumsulfat, Zinkoxid, Zinksulfid, Lithopone und Titandioxid (Rutil, Anatas), wobei die, Weisspigmente bevorzugtermassen über eine mittlere Partikelgrösse (D50) im Bereich von 0.1-40 µm, bevorzugt im Bereich von 0.1-20 µm, insbesondere im Bereich von 0.1-10 µm verfügen. Besonders bevorzugt wird Zinksulfid. Die als Komponente (D) verwendeten Metalloxide sind verschieden von den Komponenten (C) und (E).

Natürlich können die erfindungsgemässen thermoplastischen Polyamidformmassen weiterhin übliche und dem Fachmann allgemein bekannte Zusatzstoffe der **Komponente (E)** in Form der Additive (E) enthalten, die bevorzugt aus der Gruppe ausgewühlt sind bestehend aus: Haftvermittlern, Stabilisatoren, Alterungsschutzmitteln, Antioxidantien, Antiozonantien, Lichtschutzmitteln, UV-Stabilisatoren, UV-Absorbern, UV-Blockern, anorganischen Hitzestabilisatoren, insbesondere auf Basis von Kupferhalogeniden und Alkalihalogeniden, organischen Hitzestabilisatoren, Leitfähigkeitsadditiven, Russ, optischen Aufhellern, Verarbeitungshilfsmitteln, Nukleierungsmitteln, Kristallisationsbeschleunigern, Kristallisationsverzögerern, Fliesshilfsmitteln, Gleitmitteln, Entformungsmitteln, Verträglichkeitsvermittlern, Weichmachern, Pigmenten, insbesondere organische Pigmente, Farbstoffen verschieden von Komponente (D), Markierungsstoffen und Mischungen hiervon.

Des Weiteren betrifft die Erfindung ein Bauteil (Formteil), insbesondere Bauteil mit elektrischen Leiterbahnen, auf Basis einer Formmasse wie oben dargestellt. Einsatzgebiete für die MID-Technologie sind der Automobilbau, die Industrieautomation, die Medizintechnik, die Hausgeräteindustrie, Unterhaltungselektronik, die Telekommunikationstechnik, die Mess- und Analysetechnik, Maschinenbau, sowie Luft- und Raumfahrt. Die Erfindung betrifft damit auch indirekt einen Artikel, insbesondere einen Schaltungsträger, enthaltend ein Formteil, hergestellt aus der erfindungsgemässen Formmasse. In einer Ausführungsform wird der Schaltungsträger genutzt, um eine Antenne auszubilden.

Solche Formteile sind beispielsweise Gehäuse oder Gehäuseteile für tragbare elektronische Geräte, wie z.B. PDAs, Mobiltelefone, andere Telekommunikations-Geräte, Gehäuse oder Gehäuseteile für Personal Computer, Notebooks, medizinische Geräte, wie z.B. Hörgeräte, Sensortechnik, oder RFID (Radio Frequency IDentification) Transponder oder Teile für den Automobilbereich, wie z.B. Airbagmodul, Multifunktionslenkrad.

Aufgrund der umfangreichen Gestaltungsmöglichkeiten beim Kunststoffspritzgiessen können dreidimensionale Schaltungsträger realisiert werden. Darüber hinaus können typische mechanische Funktionen wie Halter, Führungen, Taster, Stecker oder andere Verbindungselemente integriert werden. Ebenfalls möglich sind Konnektoren für Elektro- und Elektronik-Anwendungen sowie für Kraftstoffsysteme. Weitere Ausführungsformen sind in den abhängigen Ansprüchen angegeben.

Weitere Ausführungsformen sind in den abhängigen Ansprüchen angegeben.

### BESCHREIBUNG BEVORZUGTER AUSFÜHRUNGSFORMEN

Die Erfindung soll nachfolgend unter Verwendung von spezifischen Ausführungsbeispielen (B) beschrieben und mit den weniger leistungsfähigen Systemen nach dem Stand der Technik (VB) verglichen werden. Die in der Folge angegebenen Ausführungsbeispiele dienen zur Stützung der Erfindung und zum Nachweis der Unterschiede zum Stand der Technik, sie sollen aber nicht zur Einschränkung des allgemeinen Gegenstandes der Erfindung, wie er in den Patentansprüchen definiert ist, hinzugezogen werden.

### Beispiele B1 bis B9 und Vergleichsbeispiele VB1 und VB2

Die in den Tabellen 2 und 3 angegebenen Komponenten werden in einem zweiwelligen Extruder der Firma Werner und Pfleiderer mit einem Schneckendurchmesser von 25 mm bei vorgegebenen Prozessparametern (vgl. Tabelle 1) compoundiert. Dabei werden die Polyamidgranulate sowie die Zusatzstoffe in die Einzugszone dosiert, während die Glasfaser über einen Sidefeeder 3 Gehäuseeinheiten vor der Düse in die Polymerschmelze dosiert wird. Die Granulierung erfolgte mittels einer Unterwassergranulierung bzw. Heissabschlags unter Wasser, bei der die Polymerschmelze durch eine Lochdüse gedrückt und direkt nach dem Austritt aus der Düse von einem rotierenden Messer in einem Wasserstrom granuliert wird. Nach Granulierung und Trocknung bei 120°C für 24h wurden die Granulateigenschaften gemessen und die Prüfkörper hergestellt.

Die Compounds werden mit einer Spritzgussmaschine Arburg Allrounder 320-210-750 zu Probekörpern bei definierten Zylindertemperaturen der Zonen 1 bis 4 und einer definierten Werkzeugtemperatur (siehe Tabelle 1) verspritzt.

**Tabelle 1: Compoundier- und Spritzgussbedingungen für die Beispiele B1-B9 und Vergleichsbeispiele VB1 und VB2**

| **Compoundier-/Verarbeitungsparameter** | | **B1-B9, VB1, VB2** |
|---|---|---|
| Compoundierung | Zylindertemperaturen | 350 |
| | Schneckendrehzahl | 180 |
| | Durchsatz | 8 |
| Spritzguss | Zylindertemperaturen | 340 |
| | Werkzeugtemperatur | 80 |
| | Schneckenumfangs geschwindigkeit | 15 |

**Tabelle 2: Zusammensetzung und Eigenschaften der Beispiele B1 bis B4 und der Vergleichsbeispiele VB1 und VB2**

| | Einheit | **VB1** | **VB2** | **B1** | **B2** | **B3** | **B4** |
|---|---|---|---|---|---|---|---|
| ***Zusammensetzung*** | | | | | | | |
| PA 6T/10T | Gew.-% | 65.5 | 45.5 | 45.5 | 35.5 | 35.5 | 35.5 |
| PPE Typ A | Gew.-% | | | 20 | 30 | 30 | 30 |
| PA 6I/6T | Gew.-% | | 20 | | | | |
| Glasfaser Typ A | Gew.-% | 30 | 30 | 30 | 30 | 30 | 30 |
| Glasfaser Typ B | Gew.-% | | | | | | |
| LDS-Additiv 1 | Gew.-% | 4 | 4 | 4 | 4 | | |
| LDS-Additiv 2 | Gew.-% | | | | | 4 | |
| LDS-Additiv 3 | Gew.-% | | | | | | 4 |
| STAB | Gew.-% | 0.5 | 0.5 | 0.5 | 0.5 | 0.5 | 0.5 |

| ***Eigenschaften*** | | | | | | | |
|---|---|---|---|---|---|---|---|
| Zug-E-Modul | MPa | 9200 | 8400 | 9200 | 9500 | 9700 | 9700 |
| Reissfestigkeit | MPa | 139 | 110 | 138 | 140 | 168 | 166 |
| Reissdehnung | % | 2.0 | 2.2 | 2.3 | 2.3 | 2.4 | 2.5 |
| Schlagzähigkeit 23°C | kJ/m² | 25 | 32 | 36 | 37 | 68 | 64 |
| Kerbschlagzähigkeit 23°C | kJ/m² | 4.5 | 5.1 | 5.1 | 5.2 | 9 | 8 |
| HDT A (1.8 MPa) | °C | 253 | 162 | 225 | 226 | 231 | 224 |
| HDT B (0.45 MPa) | °C | >280 | 258 | 260 | 262 | 268 | 263 |
| Glanz 85° | | 82 | 75 | 90 | 92 | 93 | 94 |
| Lötbarkeit (Plattendicke ohne Blister) | mm | 1.2 | 1.7 | 1.2 | 1.2 | 1.2 | 1.2 |
| Metallisierbarkeit | | + | ++ | ++ | ++ | ++ | ++ |

**Tabelle 3: Zusammensetzung und Eigenschaften der der Beispiele B5 bis B9**

| | Einheit | **B5** | **B6** | **B7** | **B8** | **B9** |
|---|---|---|---|---|---|---|
| ***Zusammensetzung*** | | | | | | |
| PA 6T/10T | Gew.-% | 35.5 | 35.5 | 35.5 | 35.5 | 35.5 |
| PPE Typ A | Gew.-% | 30 | 30 | 20 | 15 | 20 |
| PPE Typ B | Gew.-% | | | 10 | 15 | 10 |
| Glasfaser Typ A | Gew.-% | | | 30 | | |
| Glasfaser Typ B | Gew.-% | 30 | 30 | | 30 | 30 |
| LDS-Additiv 1 | Gew.-% | 4 | | | | |
| LDS-Additiv 2 | Gew.-% | | 4 | 4 | 4 | 4 |
| STAB | Gew.-% | 0.5 | 0.5 | 0.5 | 0.5 | 0.5 |

| ***Eigenschaften*** | | | | | | |
|---|---|---|---|---|---|---|
| Zug-E-Modul | MPa | 9700 | 9800 | 9700 | 9800 | 9700 |
| Reissfestigkeit | MPa | 145 | 170 | 165 | 172 | 171 |
| Reissdehnung | % | 2.3 | 2.6 | 2.4 | 2.5 | 2.5 |
| Schlagzähigkeit 23°C | kJ/m² | 45 | 75 | 70 | 75 | 80 |
| Kerbschlagzähigkeit 23°C | kJ/m² | 8 | 12 | 14 | 12 | 14 |
| HDT A (1.8 MPa) | °C | 224 | 232 | 230 | 234 | 233 |
| HDT B (0.45 MPa) | °C | 264 | 267 | 266 | 270 | 268 |
| Glanz 85° | | 93 | 95 | 94 | 96 | 95 |
| Lötbarkeit (Plattendicke ohne Blister) | mm | 1.2 | 1.2 | 1.7 | 1.2 | 1.2 |
| Metallisierbarkeit | - | ++ | ++ | ++ | ++ | ++ |

**Tabelle 4 Zusammensetzung und Eigenschaften der Beispiele B10 bis B16**

| | | Einheit | **B10** | **B11** | **B12** | **B13** | **B14** | **B15** | **B16** |
|---|---|---|---|---|---|---|---|---|---|
| PA 6T/10T | | Gew.-% | 33.5 | 33.5 | 35.5 | 35.5 | 35.5 | 35.5 | 50.5 |
| PPE Typ C | PPE | Gew.-% | 25.6 | | | | | | |
| | PA66 | Gew.-% | 6.4 | | | | | | |
| PPE Typ D | PPE | Gew.-% | | 6.4 | | | | | |
| | PA66 | Gew.-% | | 25.6 | | | | | |
| PPE Typ E | PPE | Gew.-% | | | 22.5 | | | | |
| | PA66 | Gew.-% | | | 7.5 | | | | |
| PPE Typ F | PPE | Gew.-% | | | | 7.5 | | | |
| | PA66 | Gew.-% | | | | 22.5 | | | |
| PPE Typ G | PPE | Gew.-% | | | | | 18.0 | | |
| | PA66 | Gew.-% | | | | | 12.0 | | |
| PPE | PPE | Gew.-% | | | | | | 30 | 15 |
| Glasfaser Typ A | | Gew.-% | 30 | 30 | 30 | 30 | 30 | 30 | 30 |
| LDS-Additiv 1 | | Gew.-% | 4 | 4 | 4 | 4 | 4 | 4 | 4 |
| STAB | | Gew.-% | 0.5 | 0.5 | 0.5 | 0.5 | 0.5 | 0.5 | 0.5 |
| Zug-E-Modul | | MPa | 9900 | 10'000 | 10'000 | 9900 | 10'100 | 10'000 | 10'200 |
| Reissfestigkeit | | MPa | 141 | 142 | 144 | 136 | 142 | 145 | 148 |
| Reissdehnung | | % | 2.1 | 2.2 | 2.1 | 2.0 | 2.0 | 2.2 | 2.2 |
| Schlagzähigkeit 23°C | | kJ/m² | 36 | 39 | 32 | 40 | 35 | 38 | 38 |
| Kerbschlagzähigkeit 23°C | | kJ/m² | 5.4 | 5.1 | 5.0 | 5.2 | 5.0 | 5.5 | 5.5 |
| HDT A (1.8 MPa) | | °C | 228 | 212 | 235 | 216 | 230 | 232 | 235 |
| HDT B (0.45 MPa) | | °C | 260 | 245 | 262 | 244 | 260 | 262 | 264 |
| Glanz 85° | | | 95 | 86 | 90 | 86 | 92 | 94 | 90 |
| Lötbarkeit (Plattendicke ohne Blister) | | mm | 1.2 | 1.7 | 1.2 | 1.7 | 1.2 | 1.2 | 1.2 |
| Metallisierbarkeit | | | ++ | + | ++ | + | ++ | ++ | + |

### Legende, Materialien:

PA 6I/6T Amorphes, teilaromatisches Polyamid auf Basis von Terephthalsäure (30 mol-%), Isophthalsäure (70 mol-%) und 1,6-Hexandiamin, mit einer Glasübergangstemperatur von 125°C und einer Lösungsviskosität von 1.54.
PA 6T/10T Teilkristallines, teilaromatisches Polyamid auf Basis von 1,6-Hexandiamin (15 mol-%), 1,10-Decandiamin (85 mol-%) und Terephthalsäure, mit einem Schmelzpunkt von 305°C und einer Lösungsviskosität von 1.62.
PPE Typ A - H Mischungen aus PA66 und PPE (Poly(2,6-dimethyl-1,4-phenylenether)) im Verhältnis gemäss der nachfolgenden Tabelle, gepfropft mit Maleinsäureanhydrid (MAH-Gehalt jeweils bezogen auf die gepfropfte Mischung)

| PPE Typ | Anteil PPE [Gew.-Teile] | Anteil PA66 [Gew.-Teile] | MAH [Gew.-Teile] |
|---|---|---|---|
| A | 50 | 50 | 2 |
| B | 50 | 50 | 0.2 |
| C | 80 | 20 | 2 |
| D | 20 | 80 | 2 |
| E | 75 | 25 | 2 |
| F | 25 | 75 | 2 |
| G | 60 | 40 | 2 |

PPE Typ A entspricht damit dem Produkt Bondyram 6008; und PPE Typ B entspricht dem Produkt Bondyram 6009, beide, Polyram.
PPE PPE (Poly(2,6-dimethyl-1,4-phenylenether)), gepfropft mit Maleinsäureanhydrid (MAH-Gehalt: 1% bezogen auf das gepfropfte PPE)
Glasfaser Typ A CPIC ECS 301 HP, 3 mm lang, 10 µm Durchmesser, CPIC, China. (Glasfasern mit kreisförmigem Querschnitt)
Glasfaser Typ B CPIC ECS 301 T, 3 mm lang, 24 µm breit, 8 µm dick, Aspektverhältnis der Querschnittsachsen = 3, CPIC, China (Flache Glasfaser)
LDS-Additiv 1 Shepherd Schwarz 30C965 (The Shepherd Color Company), Kupferchromit (CuCr₂O₄), mittlere Partikelgrösse von 0.6 µm.
LDS-Additiv 2 Fabulase 322 S, Kupfer(II)hydroxydphosphat, Budenheim
LDS-Additiv 3 Fabulase 330, Metallphosphat auf Zinnbasis, Budenheim
STAB Hitzestabilisierung, N,N'-hexan-1,6-diylbis(3-(3,5-di-tert.-butyl-4-hydroxyphenylpropionamid)), Irganox 1098, BASF

Die Messungen wurden nach folgenden Normen und an folgenden Prüfkörpern durchgeführt.

### (Thermo-) Mechanische Parameter:

Der Zug-E-Modul wurde nach ISO 527 mit einer Zuggeschwindigkeit von 1 mm/min, die Streckspannung, die Reissfestigkeit und die Reissdehnung wurden bestimmt gemäss ISO 527 mit einer Zuggeschwindigkeit von 50 mm/min (unverstärkte Varianten) oder einer Zuggeschwindigkeit von 5 mm/min (verstärkte Varianten) bei einer Temperatur von 23 °C, wobei als Probekörper ein ISO-Zugstab , Norm: ISO/CD 3167, Typ A1, 170 x 20/10 x 4 mm, verwendet wurde.

Schlagzähigkeit und Kerbschlagzähigkeit nach Charpy wurden nach ISO 179 am ISO-Prüfstab, Norm: ISO/CD 3167, Typ B1, 80 x 10 x 4 mm bei Temperatur 23 °C gemessen. Das thermische Verhalten (Schmelztemperatur (Tₘ), Schmelzenthalpie (ΔHₘ), Glasumwandlungstemperatur (T_{g})) wurde anhand der ISO-Norm 11357-11-2 am Granulat bestimmt. Die Differential Scanning Calorimetry (DSC) wurde mit Aufheizrate von 20 °C/min durchgeführt.

Die relative Viskosität (ηᵣₑₗ) wurde gemäss DIN EN ISO 307 anhand von 0,5 Gew.-%-igen m-Kresollösungen bei 20 °C gemessen. Als Probe wird Granulat verwendet.

Die Wärmeformbeständigkeit in Form von HDT A (1,8 MPa) und HDT B (0.45 MPa) wurden gemäss ISO 75 an ISO-Schlagstäben der Dimension 80x10x4 mm bestimmt.

### Oberflächeneigenschaften, Glanz:

Der Glanz wurde an Platten der Dimension 80x80x1mm mit einem Gerät des Typs Minolta Multi Gloss 268 unter einem Winkel von 85° und bei einer Temperatur von 23°C nach ISO 2813 bestimmt.

### Laserstrukturierbarkeit:

Zur Beurteilung des Metallisierungsverhaltens wurden spritzgegossene Formteile (Platte 60 x 60 x 2 mm) mit Hilfe eines Nd:YAG-Lasers strukturiert und nachfolgend stromlos im Verkupferungsbad metallisiert. Bei der Laserstrukturierung wurden auf der Formteiloberfläche 18 nebeneinanderliegende, 5 x 7 mm grosse Bereiche bestrahlt. Die Laserstrukturierung erfolgte mittels eines LPKF Microline 3D Lasers bei einer Wellenlänge von 1064 nm und einer Bestrahlungsbreite von circa 50 µm bei einer Geschwindigkeit von 4 m/s. Dabei wurde sowohl die Pulsfrequenz als auch die Leistung des Lasers variiert. Für die konkreten Pulsfrequenzen von 60, 80 und 100 kHz wurde die Leistung jeweils im Bereich von 3 - 17 Watt variiert. Im Anschluss an die Laserstrukturierung werden die Formteile einem Reinigungsprozess zur Entfernung der Rückstände des Laserprozesses unterworfen. Die Formteile durchlaufen dabei nacheinander Ultraschallbäder mit Tensid und deionisiertem Wasser. Die gereinigten Formteile werden sodann in einem reduktiven Verkupferungsbad (MacDermid MID-Copper 100 B1) für 60 - 80 Minuten metallisiert. Dabei scheidet sich auf den vom Laser bestrahlten Flächen Kupfer in einer durchschnittlichen Dicke von 3 bis 5 µm ab.

### Metallisierbarkeit:

Der Metallisierbarkeit wurde optisch wie folgt beurteilt:
++: alle 18 Felder werden jeweils gleichmässig metallisiert und die abgeschiedene Kupferschicht hat eine durchschnittliche Dicke von 3 bis 5 µm.
+: 15 - 17 Felder, werden jeweils gleichmässig metallisiert und die abgeschiedene Kupferschicht hat eine durchschnittliche Dicke von 3 bis 5 µm (Felder strukturiert bei minimaler Energie werden ungenügend metallisiert).
○: 12 - 14 Felder werden jeweils gleichmässig metallisiert und die abgeschiedene Kupferschicht hat eine durchschnittliche Dicke von 3 bis 5 µm.
-: Weniger als 12 Felder werden jeweils gleichmässig metallisiert und die abgeschiedene Kupferschicht hat eine durchschnittliche Dicke von 3 bis 5 µm bzw. unstrukturierte Bereiche (ohne Bestrahlung) wurden metallisiert.

Die chemisch-reduktive Kupferabscheidung ist bei allen moulded interconnect device (MID)-Technologien der entscheidende Startmetallisierungsprozess, der über die Qualität der Gesamtschicht entscheidet. Deshalb ist es völlig ausreichend, die Qualität der Primärmetallschicht zu beurteilen. Um zum fertigen MID-Teil zu kommen, werden aufbauend auf der ersten Kupferschicht (Primärschicht) in der Regel Nickel und anschliessend eine Endschicht aus Tauchgold abgeschieden. Selbstverständlich können auch andere Metallschichten, wie z.B. weitere Kupfer-, Palladium-, Zinn- oder Silberschichten auf die Primärschicht aufgebracht werden.

### Lötbarkeit:

Es werden Stufenplatten folgender Abmessungen im Spritzgussverfahren hergestellt: Länge x Breite 60x60 dabei ist die Plattenhöhe in 5 treppenartigen Stufen wie folgt ausgeführt: 1.2mm, 1.7mm, 2.2mm, 2.7mm und 3.2mm. Dabei sind die Treppenstufen 60mm breit und 12mm tief. Diese Stufenplatten werden bei 85°C und 85% relativer Feuchte für 168 Stunden in einem Klimaschrank Allen 600 der Firma Angelantoni Industrie s.p.a. (IT) konditioniert wie es in dem Joint Industry Standard IPC/JEDEC J-STD-020D.1 für den Feuchtigkeitssensitivitätslevel 1 (Moisture Sensitivity Level, SML 1) beschrieben ist. Danach werden jeweils 3 Stufenplatten auf eine Platine gelegt (einseitige Temperaturbelastung) und mit einer Bandgeschwindigkeit von 200 mm/min durch ein Reflow Lötsystem RO300FC der Firma Essemtec AG (CH) transportiert. Die Heizzonen werden auf die in der Tabelle 5 aufgeführten Temperaturen eingestellt. Bei Prüfung 2 (einseitig) ergibt sich für die 1.7mm dicke Plattenstufe das vorgeschriebene Lötprofil mit einer Peaktemperatur von 260°C. Die Oberflächentemperatur bei der Stufe mit 1.7mm Dicke ist 54 sec über 255°C und 22 sec über 260°C. Als Ergebnis der Lötprüfung wurde die Dicke der Prüfplattenstufe ohne Blister als minimale Wandstärke bestimmt und in die Tabellen 2 bis 4 eingetragen.

VB1 weist geringe Reissdehnung, Schlagzähigkeit und Kerbschlagzähigkeit auf und hat einen zu niedrigen Glanz. Durch Verwendung des amorphen Polyamids 6T/6I (30:70) in VB2 wird zwar die Reissdehnung und die Schlagzähigkeit gegenüber VB1 verbessert, die Reissfestigkeit und der Glanz werden aber verschlechtert. Weiterhin sinkt der HDT A, B durch Verwendung des amorphen Polyamids zu weit ab, so dass eine sichere Lötbarkeit nicht mehr gewährleistet ist.

Setzt man zum teilaromatischen, teilkristallinen Polyamid nun aber einen amorphen Polyphenylenether zu, so werden bei gleichem Niveau der Reissfestigkeit die Reissdehnung, die Schlagzähigkeit und der Glanz unerwartet erhöht. HDT A und B erreichen ein ausreichendes Niveau, um eine sichere Lötbarkeit zu gewährleisten.

Eine weitere Verbesserung, insbesondere hinsichtlich der Reissfestigkeit, Reissdehnung sowie Schlagzähigkeit und Kerbschlagzähigkeit, wird erzielt, wenn, wie in den Beispielen B3 und B4, das LDS-Additiv Kupferchromit durch Kupfer oder Zinn basierte Phosphate ersetzt wird.

Wie der Vergleich der Beispiele B2 mit B5 oder B3 mit B6 ergibt, können durch die Verwendung der bevorzugten flachen Glasfasern die mechanischen Eigenschaften sowie der Glanz nochmals gegenüber den Formmassen mit runden Glasfasern verbessert werden.

## Patentansprüche

1. Thermoplastische Formmasse bestehend aus:
(A) 30 - 84.9 Gew.-% einer thermoplastischen Polymermischung, bestehend aus
(A1) 50 - 90 Gew.-% eines teilaromatischem, teilkristallinen Polyamids oder einer Mischung solcher Polyamide;
(A2) 5 - 50 Gew.-% eines Polyphenylenethers oder einer Mischung solcher Polyphenylenether,
(A3) 0 - 40 Gew.-% eines teilkristallinen, aliphatischen Polyamids oder einer Mischung solcher Polyamide,
wobei sich (A1) - (A3) zu 100 Gew.-% Komponente (A) ergänzen mit der Massgabe, dass die Summe von (A2) und (A3) 10 bis 50 Gew.-% der Komponente (A) ausmacht;
(B) 15 - 60 Gew.-% Glasfasern;
(C) 0.1 - 10 Gew.-% LDS-Additiv oder einer Mischung von LDS-Additiven, wobei mindestens ein LDS-Additiv ganz oder teilweise aus anorganischen Verbindungen des Kupfers und/oder Zinns aufgebaut ist;
(D) 0 - 40 Gew.-% partikulärer Füllstoff, verschieden von (C)
(E) 0 - 5 Gew.-% weitere andere Additive;
wobei die Summe aus (A) - (E) 100 Gew.-% ausmacht.

2. Formmasse nach Anspruch 1, **dadurch gekennzeichnet, dass** wenigstens eine der Komponenten (A2) und/oder (A3), vorzugsweise gemeinsam als Mischung aus (A2) und (A3), gepfropft sind, bevorzugt vor der Zusammenführung mit den restlichen Komponenten (A1), (B) und (C) sowie gegebenenfalls (D) und/oder (E), wobei die Komponenten (A2) und/oder (A3) vorzugsweise gepfropft sind mit ungesättigtem Anhydrid, vorzugsweise Maleinsäureanhydrid, Itaconsäureanhydrid, und/oder mit Acrylsäure, Methacrylsäure, Maleinsäure, Maleinsäuremonobutylester, Fumarsäure, Aconitsäure oder einer Mischung davon, bevorzugt in einem Pfropfgrad im Bereich zwischen 0.05 bis 5 Gew.-%, bevorzugt 0.1-3 Gew.-% und insbesondere 0.2 bis 1.5 Gew.-%, jeweils bezogen auf das Gewicht der Komponente (A2), der Komponente (A3), oder im Fall der Mischung auf die Summe von (A2) und (A3).

3. Formmasse nach einem der vorhergehenden Ansprüche, **dadurch gekennzeichnet, dass** das Verhältnis von (A2) zu (A3) im Bereich von 4:1 bis 1:4 liegt, und weiter bevorzugt das Verhältnis von (A1) zu (A2) oder von (A1) zur Summe von (A2) und (A3) im Bereich von 4:1 bis 1:2 liegt.

4. Formmasse nach einem der vorhergehenden Ansprüche, **dadurch gekennzeichnet, dass** das teilkristalline, aliphatische Polymer der Komponenten (A3) ausgewählt ist aus der Gruppe bestehend aus: Polyamid 6, Polyamid 10, Polyamid 11, Polyamid 12, Polyamid 1212, Polyamid 1012, Polyamid 1210, Polyamid 46, Polyamid 66, Polyamid 612, Polyamid 126, Polyamid 106, Polyamid 610, Polyamid 1010, Polyamid 614, Polyamid 618, Polyamid 1014, Polyamid 1018, Polyamid 1214, Polyamid 1218 sowie Copolyamide oder Mischungen davon; und/oder dass der Anteil der Komponente (A3) innerhalb der 100 Gew.-% der Komponente (A), im Bereich von 5 - 40 Gew.-% liegt, vorzugsweise im Bereich von 10 - 35 Gew.-%, insbesondere vorzugsweise im Bereich von 20 - 30 Gew.-%.

5. Formmasse nach einem der vorhergehenden Ansprüche, **dadurch gekennzeichnet, dass** der Anteil an Komponente (A) im Bereich von 55 - 90 Gew.-% oder 37-80.5 Gew.-% liegt, vorzugsweise im Bereich von 49-79 Gew.-%,
und/oder dass der Anteil an Komponente (B) im Bereich von 18-55 Gew.-%, vorzugsweise im Bereich von 20-45 Gew.-% oder im Bereich von 25 - 40 Gew.-%, jeweils bezogen auf die Summe aus (A) - (E).

6. Formmasse nach einem der vorhergehenden Ansprüche, **dadurch gekennzeichnet, dass** der Polyphenylenether der Komponente (A2) ausgewählt ist aus der Gruppe bestehend aus: Poly(2,6-diethyl-1,4-phenylen)ether, Poly(2-methyl-6-ethyl-1,4-phenylen)ether, Poly(2-methyl-6-propyl-1,4-phenylen)ether, Poly(2,6-dipropyl-1,4-phenylen)ether, Poly(2-ethyl-6-propyl-1,4-phenylen)ether oder Copolymere oder Mischungen davon
und/oder dass der Anteil der Komponente (A2) innerhalb der 100 Gew.-% der Komponente (A), im Bereich von 10 - 45 Gew.-% oder 10 - 46 Gew.-% liegt, vorzugsweise im Bereich von 15-45 Gew.-% oder 15-40 Gew.-% liegt, insbesondere vorzugsweise im Bereich von 20-40 Gew.-% und/oder dass mindestens einer der Polyphenylenether der Komponente (A2) mit Maleinsäureanhydrid zwischen 0.05 bis 5%, bevorzugt 0.1-3% und insbesondere 0.2 bis 1.5% gepfropft ist.

7. Formmasse nach einem der vorhergehenden Ansprüche, **dadurch gekennzeichnet, dass** Komponente (B) eine Glasfaser aus E-Glas mit kreisförmigem Querschnitt ist, oder dass die Komponente (B) eine Glasfaser oder ein Gemisch aus Glasfasern aus E-Glas mit nicht-kreisförmigem Querschnitt und vorzugsweise einem Achsenverhältnis von Haupt- zu Nebenquerschnittsachse wenigstens 2.5, vorzugsweise im Bereich von 2.5 - 6, ist,
oder dass die Komponente (B) eine hochfeste Glasfaser oder ein Gemisch aus hochfesten Glasfasern mit kreisförmigem oder nicht-kreisförmigem Querschnitt und einer Glaszusammensetzung, beruhend im Wesentlichen auf den Komponenten Siliciumdioxid, Aluminiumoxid und Magnesiumoxid, wobei der Anteil an Magnesiumoxid (MgO) 5-15 Gew.-% und der Anteil an Calciumoxid (CaO) 0 - 10 Gew.-% beträgt, ist.

8. Formmasse nach einem der vorhergehenden Ansprüche, **dadurch gekennzeichnet, dass** das teilaromatische, teilkristalline Polyamid (A1) gebildet ist aus einem oder einer Mischung von Polyamiden gebildet aus:
(A1_a): 50 - 100 Mol-% aromatischer Terephthalsäure und/oder Naphthalindicarbonsäure, bezogen auf den Gesamtgehalt an anwesenden Dicarbonsäuren, 0 - 50 Mol-% einer aliphatischen Dicarbonsäure, bevorzugt mit 6 bis 12 Kohlenstoffatomen, und/oder einer cycloaliphatischen Dicarbonsäure mit bevorzugt 8 bis 20 Kohlenstoffatomen, und/oder Isophthalsäure;
(A1_b): 80 - 100 Mol-% mindestens eines aliphatischen Diamins mit 4-18 Kohlenstoffatomen, vorzugsweise mit 6 bis 12 Kohlenstoffatomen, bezogen auf den Gesamtgehalt an anwesenden Diaminen, 0 - 20 Mol-% cycloaliphatische Diamine, vorzugsweise mit 6 bis 20 Kohlenstoffatomen und/oder araliphatische Diamine, wobei im Polyamid (A1) der prozentuale Molgehalt an Dicarbonsäuren 100 % und der prozentuale Molgehalt an Diaminen 100 % ausmacht, und gegebenenfalls aus:
(A1_c): Aminocarbonsäuren und/oder Lactamen mit bevorzugt mit 6 bis 12 Kohlenstoffatomen.

9. Formmasse nach einem der vorhergehenden Ansprüche, **dadurch gekennzeichnet, dass** das Polyamid (A1) ausgewählt ist aus der Gruppe bestehend aus: PA 4T/4I, PA 4T/6I, PA 5T/5I, PA 6T/6, PA 6T/6I, PA 6T/6I/6, PA 6T/66, 6T/610, 6T/612, PA 6T/10T, PA 6T/10I, PA 9T, PA 10T, PA 12T, PA 10T/10I, PA10T/106, PA10T/610, PA10T/612, PA10T/66, PA10T/6, PA10T/1010, PA10T/1012, PA10T/12, PA10T/11, PA 6T/9T, PA 6T/12T, PA 6T/10T/6I, PA 6T/6I/6, PA 6T/6I/12 sowie Mischungen davon.

10. Formmasse nach einem der vorhergehenden Ansprüche, **dadurch gekennzeichnet, dass** der Anteil an Komponente (C) im Bereich von 0.5-8 Gew.-% liegt, vorzugsweise im Bereich von 1-6 Gew.-%, jeweils bezogen auf die Summe aus (A) - (E).

11. Formmasse nach einem der vorhergehenden Ansprüche, **dadurch gekennzeichnet, dass** Komponente (C) mindestens ein LDS-Additiv auf Basis des Kupfers und/oder Zinns enthält oder ganz gebildet wird durch ein LDS-Additiv auf Basis des Kupfers und/oder Zinns ausgewählt aus der folgenden Gruppe: Metalloxid, Metallphosphat, vorzugsweise basisches Metallphosphat und/oder Metallhydroxidphosphat,
wobei vorzugsweise Komponente (C) mindestens ein LDS-Additiv enthält oder ganz gebildet wird durch ein LDS-Additiv ausgewählt aus der folgenden Gruppe: Zinnoxid; Metall- oder Metalloxid-dotiertes Zinnoxid; Antimon-dotiertes Zinnoxid; Metalloxidbeschichteter Glimmer; mit Antimon-dotiertem Zinnoxid beschichteter Glimmer; Mischung aus Zinnoxid und Antimonoxid und optional weiterer Metalloxide; Spinelle; Kupferchromoxid; Kupferoxid; Kupferhydroxid; Kupferhydroxidphosphat; Kupferphosphat; basische Kupferphosphate; Kupfer-Zinn-Phosphat; basisches Kupfer-Zinn-Phosphat; Zinnphosphat; basisches Zinnphosphat; antimondotiertes Zinnoxid, bevorzugt in Kombination mit Glimmer; oder Mischungen und Kombinationen davon, wobei es sich bei Komponente (C) vorzugsweise um ein LDS-Additiv handelt ausgewählt aus der Gruppe bestehend aus: Kupferchromoxid, Kupferoxid, Kupferhydroxydphosphat, Zinnhydroxydphosphat, Zinnphosphat, Kupferphosphat, basische Kupferphosphate und Zinnphosphate, oder Mischungen davon.

12. Formmasse nach einem der vorhergehenden Ansprüche, **dadurch gekennzeichnet, dass** der Anteil an Komponente (D) im Bereich von 0-25 Gew.-% liegt, vorzugsweise im Bereich von 0-15 Gew.-%, besonders bevorzugt im Bereich vom 2 - 15 Gew.-%, jeweils bezogen auf die Summe aus (A) - (E).

13. Formmasse nach einem der vorhergehenden Ansprüche, **dadurch gekennzeichnet, dass** Komponente (D) ein anorganisches Weisspigment ist, vorzugsweise ausgewählt aus der Gruppe Bariumsulfat, Zinkoxid, Zinksulfid, Lithopone und Titandioxid, vorzugsweise in der Rutil oder der Anatas Modifikation, oder Mischungen solcher Weisspigmente.

14. Verfahren zur Herstellung einer Formmasse nach einem der vorhergehenden Ansprüche, **dadurch gekennzeichnet, dass**
in einem ersten Schritt die Komponente (A2) und/oder die Komponente (A3), vorzugsweise eine Mischung aus den Komponenten (A2) und (A3), gepfropft werden, vorzugsweise gepfropft werden mit ungesättigtem Anhydrid, vorzugsweise Maleinsäureanhydrid, Itaconsäureanhydrid, und/oder mit Acrylsäure, Methacrylsäure, Maleinsäure, Maleinsäuremonobutylester, Fumarsäure, Aconitsäure oder einer Mischung davon, bevorzugt in einem Pfropfgrad im Bereich zwischen 0.05 bis 5 Gew.-%, bevorzugt 0.1-3 Gew.-% und insbesondere 0.2 bis 1.5 Gew.-%, jeweils bezogen auf das Gewicht der Komponente (A2), der Komponente (A3), oder im Fall der Mischung auf die Summe von (A2) und (A3),
und anschliessend in einem zweiten Schritt diese gepfropfte Komponente(n) mit den restlichen Komponenten (A1), (B) und (C) sowie gegebenenfalls (D) und/oder (E), zusammengeführt und gemischt werden.

15. Bauteil, insbesondere Bauteil mit elektrischen Leiterbahnen, auf Basis einer Formmasse nach einem der vorhergehenden Ansprüche, bevorzugt als Gehäuse oder Gehäuseteil für tragbare elektronische Geräte, wie insbesondere PDAs, Mobiltelefone, Telekommunikations-Geräte, Gehäuse oder Gehäuseteile für Personal Computer, Notebooks, medizinische Geräte, wie insbesondere Hörgeräte, Sensortechnik, oder RFID Transponder oder Teile für den Automobilbereich, wie insbesondere Airbagmodul, Multifunktionslenkrad.

## Claims

1. A thermoplastic molding composition consisting of:
(A) 30 - 84.9 wt% of a thermoplastic polymer mixture consisting of
(A1) 50 - 90 wt% of a semiaromatic, semicrystalline polyamide or of a mixture of such polyamides,
(A2) 5 - 50 wt% of a polyphenylene ether or of a mixture of such polyphenylene ethers,
(A3) 0 - 40 wt% of a semicrystalline, aliphatic polyamide or of a mixture of such polyamides,
(A1) - (A3) adding up to 100 wt% of component (A),
with the proviso that the sum of (A2) and (A3) accounts for 10 to 50 wt% of component (A) ;
(B) 15 - 60 wt% of glass fibers;
(C) 0.1 - 10 wt% of LDS additive or of a mixture of LDS additives, at least one LDS additive being composed wholly or partly of inorganic compounds of copper and/or of tin;
(D) 0 - 40 wt% of particulate filler other than (C) ;
(E) 0 - 5 wt% of further, different additives; the sum of (A) - (E) making up 100 wt%.

2. The molding composition as claimed in claim 1, **characterized in that** at least one of the components (A2) and/or (A3), preferably together as a mixture of (A2) and (A3), are grafted, preferably before being combined with the remaining components (A1), (B) and (C) and also optionally (D) and/or (E), components (A2) and/or (A3) being preferably grafted with unsaturated anhydride, preferably maleic anhydride, itaconic anhydride, and/or with acrylic acid, methacrylic acid, maleic acid, monobutyl maleate, fumaric acid, aconitic acid or a mixture thereof, preferably in a degree of grafting in the range between 0.05 to 5 wt%, preferably 0.1 - 3 wt% and more particularly 0.2 to 1.5 wt%, based in each case on the weight of component (A2), of component (A3), or, in the case of the mixture, on the sum of (A2) and (A3).

3. The molding composition as claimed in either of the preceding claims, **characterized in that** the ratio of (A2) to (A3) is in the range from 4:1 to 1:4, and more preferably the ratio of (A1) to (A2) or of (A1) to the sum of (A2) and (A3) is in the range from 4:1 to 1:2.

4. The molding composition as claimed in any of the preceding claims, **characterized in that** the semicrystalline, aliphatic polymer of the components (A3) is selected from the group consisting of the following: polyamide 6, polyamide 10, polyamide 11, polyamide 12, polyamide 1212, polyamide 1012, polyamide 1210, polyamide 46, polyamide 66, polyamide 612, polyamide 126, polyamide 106, polyamide 610, polyamide 1010, polyamide 614, polyamide 618, polyamide 1014, polyamide 1018, polyamide 1214, polyamide 1218 and also copolyamides or mixtures thereof;
and/or **in that** the fraction of component (A3) within the 100 wt% of component (A) is in the range of 5 - 40 wt%, preferably in the range of 10 - 35 wt%, especially preferably in the range of 20 - 30 wt%.

5. The molding composition as claimed in any of the preceding claims, **characterized in that** the fraction of component (A) is in the range of 55 - 90 wt% or 37 - 80.5 wt%, preferably in the range of 49 - 79 wt%,
and/or **in that** the fraction of component (B) is in the range of 18 - 55 wt%, preferably in the range of 20 - 45 wt% or in the range of 25 - 40 wt%, based in each case on the sum of (A) - (E).

6. The molding composition as claimed in any of the preceding claims, **characterized in that** the polyphenylene ether of component (A2) is selected from the group consisting of the following: poly(2,6-diethyl-1,4-phenylene) ether, poly(2-methyl-6-ethyl-1,4-phenylene) ether, poly(2-methyl-6-propyl-1,4-phenylene) ether, poly(2,6-dipropyl-1,4-phenylene) ether, poly(2-ethyl-6-propyl-1,4-phenylene) ether or copolymers or mixtures thereof
and/or **in that** the fraction of component (A2) within the 100 wt% of component (A) is in the range of 10 - 45 wt% or 10 - 46 wt%, preferably in the range of 15 - 45 wt% or 15 - 40 wt%, especially preferably in the range of 20 - 40 wt% and/or **in that** at least one of the polyphenylene ethers of component (A2) is grafted with maleic anhydride between 0.05 to 5%, preferably 0.1 - 3% and more particularly 0.2 to 1.5%.

7. The molding composition as claimed in any of the preceding claims, **characterized in that** component (B) is a glass fiber of E glass with a circular cross section
or **in that** component (B) is a glass fiber or a mixture of glass fibers of E glass with a non-circular cross section and preferably with an axial ratio of the principal cross sectional axis to the secondary cross sectional axis of at least 2.5, preferably in the range of 2.5 - 6 or **in that** component (B) is a high-strength glass fiber or a mixture of high-strength glass fibers with a circular or non-circular cross section and with a glass composition based essentially on the components silicon dioxide, aluminum oxide and magnesium oxide, with the fraction of magnesium oxide (MgO) being 5 - 15 wt% and the fraction of calcium oxide (CaO) being 0 - 10 wt%.

8. The molding composition as claimed in any of the preceding claims, **characterized in that** the semiaromatic, semicrystalline polyamide (A1) is formed from one or from a mixture of polyamides formed from:
(A1_a): 50 - 100 mol% of aromatic terephthalic acid and/or naphthalenedicarboxylic acid, based on the total amount of dicarboxylic acids present, 0 - 50 mol% of an aliphatic dicarboxylic acid, preferably having 6 to 12 carbon atoms, and/or of a cycloaliphatic dicarboxylic acid having preferably 8 to 20 carbon atoms, and/or isophthalic acid;
(A1_b) : 80 - 100 mol% of at least one aliphatic diamine having 4 - 18 carbon atoms, preferably having 6 to 12 carbon atoms, based on the total amount of diamines present, 0 - 20 mol% of cycloaliphatic diamines, preferably having 6 to 20 carbon atoms, and/or araliphatic diamines, the percentage molar amount of dicarboxylic acids making 100% and the percentage molar amount of diamines making 100% in the polyamide (A1), and optionally from:
(A1_c): aminocarboxylic acids and/or lactams having preferably having 6 to 12 carbon atoms.

9. The molding composition as claimed in any of the preceding claims, **characterized in that** the polyamide (A1) is selected from the group consisting of the following: PA 4T/4I, PA 4T/6I, PA 5T/5I, PA 6T/6, PA 6T/6I, PA 6T/6I/6, PA 6T/66, 6T/610, 6T/612, PA 6T/10T, PA 6T/10I, PA 9T, PA 10T, PA 12T, PA 10T/10I, PA10T/106, PA10T/610, PA10T/612, PA10T/66, PA10T/6, PA10T/1010, PA10T/1012, PA10T/12, PA10T/11, PA 6T/9T, PA 6T/12T, PA 6T/10T/6I, PA 6T/6I/6, PA 6T/6I/12 and also mixtures thereof.

10. The molding composition as claimed in any of the preceding claims, **characterized in that** the fraction of component (C) is in the range of 0.5 - 8 wt%, preferably in the range of 1 - 6 wt%, based in each case on the sum of (A) - (E).

11. The molding composition as claimed in any of the preceding claims, **characterized in that** component (C) comprises at least one LDS additive based on copper and/or tin or is formed entirely by an LDS additive based on copper and/or tin, selected from the following group: metal oxide, metal phosphate, preferably basic metal phosphate and/or metal hydroxide phosphate,
and preferably component (C) comprises at least one LDS additive or is formed entirely by an LDS additive selected from the following group: tin oxide; metal-doped or metal oxide-doped tin oxide; antimony-doped tin oxide; metal oxide-coated mica; mica coated with antimony-doped tin oxide; mixture of tin oxide and antimony oxide and optionally further metal oxides; spinels; copper chromium oxide; copper oxide; copper hydroxide; copper hydroxide phosphate; copper phosphate; basic copper phosphates; copper tin phosphate; basic copper tin phosphate; tin phosphate; basic tin phosphate; antimony-doped tin oxide, preferably in combination with mica; or mixtures and combinations thereof,
wherein preferably component (C) is an LDS additive selected from the group consisting of the following: copper chromium oxide, copper oxide, copper hydroxide phosphate, tin hydroxide phosphate, tin phosphate, copper phosphate, basic copper phosphates and tin phosphates, or mixtures thereof.

12. The molding composition as claimed in any of the preceding claims, **characterized in that** the fraction of component (D) is in the range of 0 - 25 wt%, preferably in the range of 0 - 15 wt%, more preferably in the range of 2 - 15 wt%, based in each case on the sum of (A) - (E).

13. The molding composition as claimed in any of the preceding claims, **characterized in that** component (D) is an inorganic white pigment, preferably selected from the group of barium sulfate, zinc oxide, zinc sulfide, lithopones and titanium dioxide, preferably in the rutile or the anatase modification, or mixtures of such white pigments.

14. A process for producing a molding composition as claimed in any of the preceding claims, **characterized in that**
in a first step component (A2) and/or component (A3), preferably a mixture of components (A2) and (A3), are grafted, being grafted preferably with unsaturated anhydride, preferably maleic anhydride, itaconic anhydride, and/or with acrylic acid, methacrylic acid, maleic acid, monobutyl maleate, fumaric acid, aconitic acid or a mixture thereof, preferably in a degree of grafting in the range between 0.05 to 5 wt%, preferably 0.1 - 3 wt% and more particularly 0.2 to 1.5 wt%, based in each case on the weight of component (A2), of component (A3), or, in the case of the mixture, on the sum of (A2) and (A3),
and subsequently in a second step this grafted component or these grafted components are combined and mixed with the remaining components (A1), (B) and (C) and also optionally (D) and/or (E).

15. A component, more particularly a component with electrical conductor tracks, based on a molding composition according to any of the preceding claims, preferably as casing or casing part for portable electronic devices, such as especially PDAs, mobile telephones, telecommunications devices, casings or casing parts for personal computers, notebook computers, medical devices, such as, in particular, hearing devices, sensor technology, or RFID transponders or parts for the automotive sector, such as, in particular, airbag module, multi-function steering wheel.

## Revendications

1. Matériau de moulage thermoplastique, constitué par :
(A) 30 à 84,9 % en poids d'un mélange de polymères thermoplastiques, constitué par :
(A1) 50 à 90 % en poids d'un polyamide partiellement cristallin et partiellement aromatique ou d'un mélange de tels polyamides,
(A2) 5 à 50 % en poids d'un polyéther de phénylène ou d'un mélange de tels polyéthers de phénylène,
(A3) 0 à 40 % en poids d'un polyamide aliphatique partiellement cristallin ou d'un mélange de tels polyamides,
la somme de (A1) à (A3) étant de 100 % en poids du composant (A),
à condition que la somme de (A2) et (A3) soit de 10 à 50 % en poids du composant (A) ;
(B) 15 à 60 % en poids de fibres de verre ;
(C) 0,1 à 10 % en poids d'un additif LDS ou d'un mélange d'additifs LDS, au moins un additif LDS étant formé en totalité ou en partie par des composés inorganiques de cuivre et/ou d'étain ;
(D) 0 à 40 % en poids de charges particulaires, différentes de (C),
(E) 0 à 5 % en poids d'autres additifs ;
la somme de (A) à (E) étant de 100 % en poids.

2. Matériau de moulage selon la revendication 1, **caractérisé en ce qu'**au moins un des composants (A2) et/ou (A3), de préférence ensemble sous la forme d'un mélange de (A2) et (A3), est greffé, de préférence avant la réunion avec les composants restants (A1), (B) et (C) et éventuellement (D) et/ou (E), les composants (A2) et/ou (A3) étant de préférence greffés avec un anhydride insaturé, de préférence l'anhydride de l'acide maléique, l'anhydride de l'acide itaconique, et/ou avec de l'acide acrylique, de l'acide méthacrylique, de l'acide maléique, de l'ester monobutylique de l'acide maléique, de l'acide fumarique, de l'acide aconitique ou un mélange de ceux-ci, de préférence en un degré de greffage dans la plage allant de 0,05 à 5 % en poids, de préférence de 0,1 à 3 % en poids et notamment de 0,2 à 1,5 % en poids, à chaque fois par rapport au poids du composant (A2), du composant (A3) ou, dans le cas du mélange, de la somme de (A2) et (A3).

3. Matériau de moulage selon l'une quelconque des revendications précédentes, **caractérisé en ce que** le rapport entre (A2) et (A3) se situe dans la plage allant de 4:1 à 1:4, et, de manière davantage préférée, le rapport entre (A1) et (A2) ou entre (A1) et la somme de (A2) et (A3) se situe dans la plage allant de 4:1 à 1:2.

4. Matériau de moulage selon l'une quelconque des revendications précédentes, **caractérisé en ce que** le polymère aliphatique partiellement cristallin du composant (A3) est choisi dans le groupe constitué par : le polyamide 6, le polyamide 10, le polyamide 11, le polyamide 12, le polyamide 1212, le polyamide 1012, le polyamide 1210, le polyamide 46, le polyamide 66, le polyamide 612, le polyamide 126, le polyamide 106, le polyamide 610, le polyamide 1010, le polyamide 614, le polyamide 618, le polyamide 1014, le polyamide 1018, le polyamide 1214, le polyamide 1218, ainsi que leurs copolyamides ou leurs mélanges;
et/ou **en ce que** la proportion du composant (A3) se situe dans la plage allant de 5 à 40 % en poids, de préférence dans la plage allant de 10 à 35 % en poids, de manière particulièrement préférée dans la plage allant de 20 à 30 % en poids, parmi les 100 % en poids du composant (A).

5. Matériau de moulage selon l'une quelconque des revendications précédentes, **caractérisé en ce que** la proportion du composant (A) se situe dans la plage allant de 55 à 90 % en poids ou de 37 à 80,5 % en poids, de préférence dans la plage allant de 49 à 79 % en poids, et/ou **en ce que** la proportion du composant (B) se situe dans la plage allant de 18 à 55 % en poids, de préférence dans la plage allant de 20 à 45 % en poids ou dans la plage allant de 25 à 40 % en poids, à chaque fois par rapport à la somme de (A) à (E).

6. Matériau de moulage selon l'une quelconque des revendications précédentes, **caractérisé en ce que** le polyéther de phénylène du composant (A2) est choisi dans le groupe constitué par : le polyéther de 2,6-diéthyl-1,4-phénylène, le polyéther de 2-méthyl-6-éthyl-1,4-phénylène, le polyéther de 2-méthyl-6-propyl-1,4-phénylène, le polyéther de 2,6-dipropyl-1,4-phénylène, le polyéther de 2-éthyl-6-propyl-1,4-phénylène ou leurs copolymères ou leurs mélanges,
et/ou **en ce que** la proportion du composant (A2) se situe dans la plage allant de 10 à 45 % en poids ou de 10 à 46 % en poids, de préférence dans la plage allant de 15 à 45 % en poids ou de 15 à 40 % en poids, de manière particulièrement préférée dans la plage allant de 20 à 40 % en poids, parmi les 100 % en poids du composant (A), et/ou **en ce qu'**au moins un des polyéthers de phénylène du composant (A2) est greffé avec de l'anhydride de l'acide maléique entre 0,05 et 5 %, de préférence 0,1 à 3 % et notamment 0,2 à 1,5 %.

7. Matériau de moulage selon l'une quelconque des revendications précédentes, **caractérisé en ce que** le composant (B) est une fibre de verre en verre E ayant une section transversale circulaire, ou **en ce que** le composant (B) est une fibre de verre ou un mélange de fibres de verre en verre E ayant une section transversale non circulaire, et de préférence un rapport entre l'axe principal et l'axe secondaire de la section transversale d'au moins 2,5, de préférence dans la plage allant de 2,5 à 6,
ou **en ce que** le composant (B) est une fibre de verre hautement résistante ou un mélange de fibres de verre hautement résistantes ayant une section transversale circulaire ou non circulaire, et d'une composition de verre, essentiellement à base des composants dioxyde de silicium, oxyde d'aluminium et oxyde de magnésium, la proportion d'oxyde de magnésium (MgO) étant de 5 à 15 % en poids et la proportion d'oxyde de calcium (CaO) étant de 0 à 10 % en poids.

8. Matériau de moulage selon l'une quelconque des revendications précédentes, **caractérisé en ce que** le polyamide partiellement cristallin et partiellement aromatique (A1) est formé par un polyamide ou un mélange de polyamides formé par :
(A1_a) : 50 à 100 % en moles d'acide téréphtalique aromatique et/ou d'acide naphtaline-dicarboxylique, par rapport à la teneur totale en acides dicarboxyliques présents, 0 à 50 % en moles d'un acide dicarboxylique aliphatique, de préférence contenant 6 à 12 atomes de carbone, et/ou d'un acide dicarboxylique cycloaliphatique contenant de préférence 8 à 20 atomes de carbone, et/ou d'acide isophtalique ;
(A1_b) : 80 à 100 % en moles d'au moins une diamine aliphatique contenant 4 à 18 atomes de carbone, de préférence contenant 6 à 12 atomes de carbone, par rapport à la teneur totale en diamines présentes, 0 à 20 % en moles de diamines cycloaliphatiques, de préférence contenant 6 à 20 atomes de carbone, et/ou de diamines araliphatiques, la teneur molaire en pourcentages d'acides dicarboxyliques dans le polyamide (A1) étant de 100 % et la teneur molaire en pourcentage en diamines étant de 100 %, et éventuellement par :
(A1_c) : des acides aminocarboxyliques et/ou des lactames contenant de préférence 6 à 12 atomes de carbone.

9. Matériau de moulage selon l'une quelconque des revendications précédentes, **caractérisé en ce que** le polyamide (A1) est choisi dans le groupe constitué par : PA 4T/4I, PA 4T/6I, PA 5T/5I, PA 6T/6, PA 6T/6I, PA 6T/6I/6, PA 6T/66, 6T/610, 6T/612, PA 6T/10T, PA 6T/10I, PA 9T, PA 10T, PA 12T, PA 10T/10I, PA 10T/106, PA 10T/610, PA 10T/612, PA 10T/66, PA 10T/6, PA 10T/1010, PA 10T/1012, PA 10T/12, PA 10T/11, PA 6T/9T, PA 6T/12T, PA 6T/10T/6I, PA 6T/6I/6, PA 6T/6I/12 et leurs mélanges.

10. Matériau de moulage selon l'une quelconque des revendications précédentes, **caractérisé en ce que** la proportion du composant (C) se situe dans la plage allant de 0,5 à 8 % en poids, de préférence dans la plage allant de 1 à 6 % en poids, à chaque fois par rapport à la somme de (A) à (E).

11. Matériau de moulage selon l'une quelconque des revendications précédentes, **caractérisé en ce que** le composant (C) contient au moins un additif LDS à base de cuivre et/ou d'étain ou est entièrement formé par un additif LDS à base de cuivre et/ou d'étain choisi dans le groupe suivant : un oxyde métallique, un phosphate métallique, de préférence un phosphate métallique basique et/ou un hydroxyphosphate métallique,
le composant (C) contenant de préférence au moins un additif LDS ou étant entièrement formé par un additif LDS choisi dans le groupe suivant : l'oxyde d'étain ; l'oxyde d'étain dopé par un métal ou un oxyde métallique ; l'oxyde d'étain dopé par de l'antimoine ; le mica revêtu par un oxyde métallique ; le mica revêtu par de l'oxyde d'étain dopé par de l'antimoine ; un mélange d'oxyde d'étain et d'oxyde d'antimoine et éventuellement d'autres oxydes métalliques ; les spinelles ; l'oxyde de cuivre et de chrome ; l'oxyde de cuivre ; l'hydroxyde de cuivre ; l'hydroxyphosphate de cuivre ; le phosphate de cuivre ; les phosphates de cuivre basiques ; le phosphate de cuivre et d'étain ; le phosphate de cuivre et d'étain basique ; le phosphate d'étain ; le phosphate d'étain basique ; l'oxyde d'étain dopé par de l'antimoine, de préférence en combinaison avec du mica; ou leurs mélanges et leurs combinaisons, le composant (C) étant de préférence un additif LDS choisi dans le groupe constitué par : l'oxyde de cuivre et de chrome, l'oxyde de cuivre, l'hydroxyphosphate de cuivre, l'hydroxyphosphate d'étain, le phosphate d'étain, le phosphate de cuivre, les phosphates de cuivre et les phosphates d'étain basiques, ou leurs mélanges.

12. Matériau de moulage selon l'une quelconque des revendications précédentes, **caractérisé en ce que** la proportion du composant (D) se situe dans la plage allant de 0 à 25 % en poids, de préférence dans la plage allant de 0 à 15 % en poids, de manière particulièrement préférée dans la plage allant de 2 à 15 % en poids, à chaque fois par rapport à la somme de (A) à (E).

13. Matériau de moulage selon l'une quelconque des revendications précédentes, **caractérisé en ce que** le composant (D) est un pigment blanc inorganique, de préférence choisi dans le groupe constitué par le sulfate de baryum, l'oxyde de zinc, le sulfure de zinc, le lithopone et le dioxyde de titane, de préférence sous forme rutile ou anatase, ou les mélanges de tels pigments blancs.

14. Procédé de fabrication d'un matériau de moulage selon l'une quelconque des revendications précédentes, **caractérisé en ce que**
lors d'une première étape, le composant (A2) et/ou le composant (A3), de préférence un mélange des composants (A2) et (A3), sont greffés, de préférence sont greffés avec un anhydride insaturé, de préférence l'anhydride de l'acide maléique, l'anhydride de l'acide itaconique, et/ou avec de l'acide acrylique, de l'acide méthacrylique, de l'acide maléique, de l'ester monobutylique de l'acide maléique, de l'acide fumarique, de l'acide aconitique ou un mélange de ceux-ci, de préférence en un degré de greffage dans la plage allant de 0,05 à 5 % en poids, de préférence de 0,1 à 3 % en poids et notamment de 0,2 à 1,5 % en poids, à chaque fois par rapport au poids du composant (A2), du composant (A3) ou, dans le cas du mélange, de la somme de (A2) et (A3), puis, lors d'une deuxième étape, ce ou ces composants greffés sont réunis et mélangés avec les composants restants (A1), (B) et (C) et éventuellement (D) et/ou (E) .

15. Composant, notamment composant comprenant des circuits électriques, à base d'un matériau de moulage selon l'une quelconque des revendications précédentes, de préférence en tant que boîtier ou partie de boîtier pour appareils électroniques portables, tels que notamment des assistants numériques personnels, des téléphones portables, des appareils de télécommunication, des boîtiers ou parties de boîtiers pour ordinateurs personnels, des notebooks, des appareils médicaux, tels que notamment des appareils auditifs, pour la technologie des capteurs, ou des transpondeurs RFID ou des parties pour le domaine automobile, telles que notamment un module d'airbag, un volant multifonctionnel.
